(19) Europäisches Patentamt
European Patent Office
Office européen des brevets

(11) EP 2 495 288 B1

(12) EUROPEAN PATENT SPECIFICATION

(45) Date of publication and mention of the grant of the patent:
**03.09.2014 Bulletin 2014/36**

(21) Application number: **10826749.3**

(22) Date of filing: **27.10.2010**

(51) Int Cl.:
***C09B 67/22*** (2006.01) ***C09B 67/20*** (2006.01)
***C09B 67/02*** (2006.01) ***C09B 67/46*** (2006.01)
***G02B 5/20*** (2006.01) ***G02B 5/22*** (2006.01)
***C09B 57/00*** (2006.01) ***C09B 67/00*** (2006.01)

(86) International application number:
**PCT/JP2010/069024**

(87) International publication number:
**WO 2011/052617 (05.05.2011 Gazette 2011/18)**

(54) **DIKETOPYRROLOPYRROLE PIGMENT DISPERSANT, AND PIGMENT COMPOSITION, COLORED COMPOSITION, AND COLOR FILTER USING THE DISPERSANT**

DIKETOPYRROLOPYRROL-PIGMENTDISPERGATOR, PIGMENTZUSAMMENSETZUNG DAMIT, GEFÄRBTE ZUSAMMENSETZUNG UND FARBFILTER UNTER VERWENDUNG DES DISPERGATORS

AGENT DISPERSANT DICÉTOPYRROLOPYRROLE, COMPOSITION DE PIGMENT, COMPOSITION COLORÉE ET FILTRE COLORÉ L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.10.2009 JP 2009247151**

(43) Date of publication of application:
**05.09.2012 Bulletin 2012/36**

(73) Proprietors:
- **Toyo Ink SC Holdings Co., Ltd.**
  **Tokyo 104-8377 (JP)**
- **Toyocolor Co., Ltd.**
  **Chuo-ku**
  **Tokyo 104-8381 (JP)**

(72) Inventors:
- **FUJIKI, Masayuki**
  **Tokyo 104-8381 (JP)**
- **IKEDA, Ryo**
  **Tokyo 104-8381 (JP)**

(74) Representative: **Maiwald Patentanwalts GmbH**
**Elisenhof**
**Elisenstrasse 3**
**80335 München (DE)**

(56) References cited:
**EP-A1- 2 236 562** **EP-A2- 0 511 165**
**WO-A1-2008/107073** **WO-A1-2009/081930**
**JP-A- 3 026 767** **JP-A- 2007 009 096**
**JP-A- 2007 169 607** **JP-A- 2007 224 177**
**JP-A- 2007 266 285** **JP-A- 2007 266 285**
**JP-A- 2009 029 886** **JP-A- 2009 221 266**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 495 288 B1

## Description

The present invention relates to a pigment dispersant, a pigment composition, and a coloring composition that are suitably used for printing ink, paint, a resin colorant, ink jet ink, and color filter ink. The present invention also relates to a color filter used for a color liquid crystal display, a color image pickup tube element, and the like.

Background Art

In printing ink, paint, and the like, a pigment is finely dispersed to exhibit a high level of coloring power so that a sharp color tone, luster, and like suitable properties are imparted to printed matter or painted articles. Also, dispersing a pigment so as to be in a stable state makes it possible to greatly reduce labor and energy when producing printing ink and paint. Moreover, a dispersion in a stable state generally has excellent storage stability

However, since pigments used for printing ink and paint are often fine particles in order to achieve a sharper color tone, the cohesive force between pigment particles are strong, thus making it difficult to impart suitable properties such as those mentioned above.

In order to solve such a problem, it is known to use a pigment dispersant to improve affinity between a pigment and a vehicle and stabilize a dispersion. Heretofore, various pigment dispersants have been disclosed.

For example, a pigment derivative in which a functional group such as an acidic group, a basic group, or a phthalimidomethyl group is introduced in an organic pigment has been developed, and efficacy has been obtained. However, having an organic pigment as its matrix backbone, such a pigment derivative has an intrinsic strong color, and its use may be significantly restricted when used in pigments having different hues.

For example, in a system where extremely fine diketopyrrolopyrrole pigment particles are dispersed, such as printing ink, paint, or especially ink jet ink or color filter ink, a diketopyrrolopyrrole pigment dispersant as described in patent document 1 is used to reduce the strong cohesive force of pigment particles and to obtain stability over time. This pigment dispersant has excellent dispersibility; however, the dispersion thereof is problematic in that sharpness (lightness) is poor.

Meanwhile, a color filter is composed of fine filter segments in a streak (stripe) form having two or more different hues disposed parallelly or orthogonally, or of fine filter segments disposed at specific longitudinal and lateral intervals, on the surface of a transparent substrate such as glass. A filter segment is as fine as several microns to several hundreds of microns, and orderly disposed in a specific arrangement for each hue. Generally, in a color liquid crystal display, a transparent electrode to drive a liquid crystal is formed by vapor deposition or sputtering on a color filter, and an oriented film to orient the liquid crystal in a specific direction is further formed thereon. Processes for forming this transparent electrode and orientation film are performed generally at high temperatures of 200°C or higher, and in some cases 230°C or higher. Therefore, currently, as a method for producing a color filter, a method called a pigment dispersion method that uses a pigment having excellent light resistance and heat resistance as a coloring agent has become mainstream.

However, due to, for example, scattering of light caused by a pigment, a color filter produced by a pigment dispersion method is generally problematic in disturbing the degree of polarization controlled by a liquid crystal. Accordingly, light leaks when light has to be blocked, or light is attenuated when light must be transmitted, and therefore, the low ratio (contrast) of the luminance of a display when light is blocked to that when light is transmitted is a problem.

Among the pigments used for color filters, anthraquinone-based pigments, perylene-based pigments, diketopyrrolopyrrole-based pigments, and the like have been used to produce red filters. Among these pigments, diketopyrrolopyrrole-based pigments in particular exhibit favorable color properties when processed into a coating film, and thus often used in such an application.

Recently, further contrast enhancement has been required of pigments used for color filters, and it has become difficult with conventionally used diketopyrrolopyrrole-based pigments to achieve such an object.

Generally, regarding pigments that have a high level of coloring power and a sharp color tone, primary particles of many such pigments are fine. In particular, pigments used for color filters are often made finer than conventional pigments to enhance the contrast of a coating film.

An example of a method now widely used as a pigment forming method for preparing fine pigment particles is a solvent salt milling method . However, with mere blending of a pigment with generally used pulverization aids or the like, such as an inorganic salt and a solvent, growth of pigment particles simultaneously occurs due to heat generated during pulverization, a solvent added as a dispersion aid, or the like, and pigment particles become unstable by being subjected to mechanical force for a long period of time and undergo a change such as crystal transition. Thus, it may not be possible to stably obtain a sufficient fine pigment even when large amounts of time and energy are spent.

Meanwhile, as a pigment is made finer, the cohesive force between pigment particles is increased, and ink and paint often exhibit high viscosity. In addition, when producing a dispersion thereof, not only removal of a product from a disperser as well as transfer from a disperser to a tank or the like are difficult, but also gelation may occur during storage in a worse case, making it difficult to use the dispersion.

In order to solve such a problem, it is known to use a pigment dispersant to improve affinity between a pigment and a vehicle to stabilize the dispersion, and heretofore various pigment dispersants have been disclosed. For example, a pigment derivative in which a functional group such as an acidic group, a basic group, or a phthalimidomethyl group is introduced in an organic pigment, and a resinous dispersant in which an acidic group or a basic group is introduced in a part of an acrylic polymer or a polyester resin, have been developed and used singly or as a combination, and they have been effective. Also, some of the pigment dispersants have an effect of preventing the crystal growth of a pigment.
However, the pigment crystal growth preventive effect of conventional pigment dispersants is not necessarily sufficient to stably obtain very fine pigment particles that are sufficient for achieving a high level of sharpness, such as printing ink, paint, and in particular ink jet ink and color filter ink.

Citation List

Patent Documents

Patent Document 1: JP H3-26767A
Patent Document 2: JP H6-316676A
Patent Document 3: JP H6-331398A

EP 2 236 562 A1 describes a diketopyrrolopyrrole pigment composition for a red color filter, wherein crystal growth is inhibited by a diketopyrrolopyrrole derivative.

Summary of Invention

Technical Problem

An object of the present invention is to provide a pigment dispersant that exhibits, in addition to a high level of dispersibility that has been required of a pigment dispersant, a high level of sharpness (lightness) and a strong pigment crystal growth preventive effect on diketopyrrolopyrrole-based pigments. Another object of the present invention is to provide a pigment composition in which the sharpness (lightness) of a pigment is not impaired and that exhibits excellent dispersibility on a pigment carrier. A still another object of the present invention is to provide a coloring composition that has a high level of sharpness (lightness), exhibits excellent fluidity, storage stability, and luster when processed into a dry film, and is suitably used as printing ink, paint, ink jet ink, color filter ink.

Solution to Problem

The diketopyrrolopyrrole pigment dispersant of the present invention is a compound represented by formula (1) below.

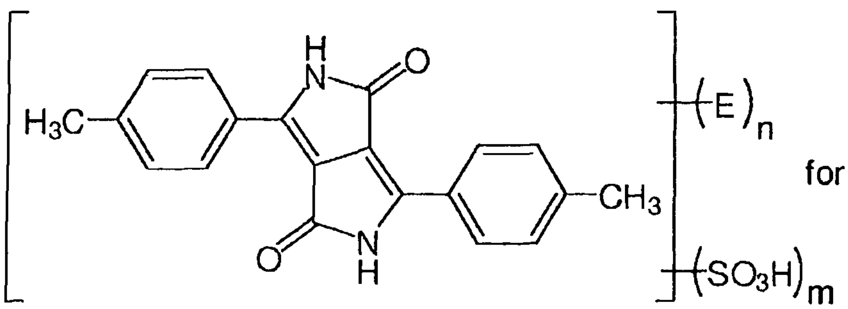
formula (1)

In formula (1), E represents a basic group represented by formula (2) below, and n and m is 1:

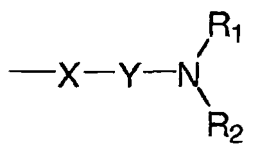
formula (2)

In formula (2), X represents a direct bond, -S-, -O-, $-SO_2-$, -CO-, $-SO_2NR-$, $-NRSO_2-$, -CONR-, $-CH_2NRCOCH_2NR-$, or $-(CH_2)_kNH-$, provided that k represents an integer of 1 to 10. R represents a hydrogen atom, an optionally substituted alkyl group having 20 or fewer carbon atoms, an optionally substituted alkenyl group having 20 or fewer carbon atoms, or an optionally substituted aryl group having 20 or fewer carbon atoms.

In formula (2), Y represents a direct bond, an optionally substituted alkylene group having 20 or fewer carbon atoms, an optionally substituted alkenylene group having 20 or fewer carbon atoms, an optionally substituted arylene group having 20 or fewer carbon atoms, an optionally substituted heterocycle containing a nitrogen, oxygen, or sulfur atom, or $-Y_1-Y_2-Y_3-$. $Y_1$ and $Y_3$ each independently represent an optionally substituted alkylene group having 20 or fewer carbon atoms, an optionally substituted alkenylene group having 20 or fewer carbon atoms, an optionally substituted arylene group having 20 or fewer carbon atoms, or an optionally substituted heterocycle containing a nitrogen, oxygen, or sulfur atom. $Y_2$ represents a direct bond, -NR-, -O-, $-SO_2-$, or -CO-, and R is as defined above, provided that $Y_2$ is not a direct bond when $Y_1$ and $Y_3$ represent the same group.

In formula (2), $R_1$ and $R_2$ each independently represent an optionally substituted saturated or unsaturated alkyl group having 30 or fewer carbon atoms.

In a preferred embodiment, the diketopyrrolopyrrole pigment dispersant of the present invention is a compound represented by formula (4) below:

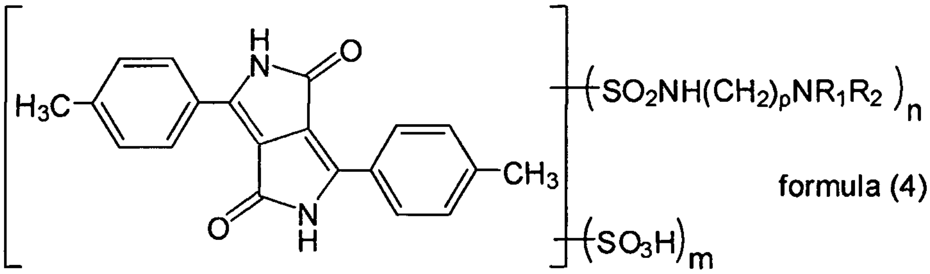

formula (4)

In formula (4), p represents an integer of 2 to 5; and $R_1$ and $R_2$ each independently represent an optionally substituted saturated or unsaturated alkyl group having 10 or fewer carbon atoms.

The present invention also provides a pigment dispersant composition comprising the diketopyrrolopyrrole pigment dispersant as represented by formula (1) or (4) above, and further comprising a compound represented by formula (1) below:

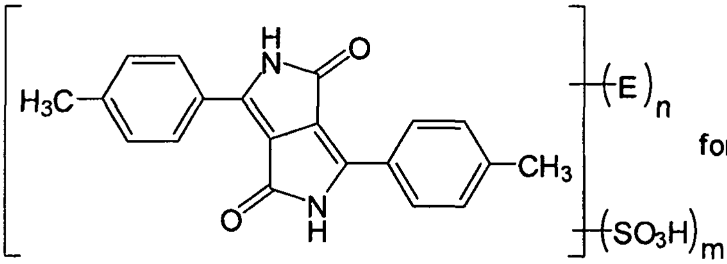

formula (1)

In said formula (1), E represents a basic group represented by formula (2) or (3) below; and n is 2 and m is 0:

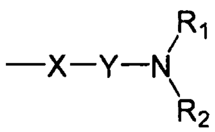

formula (2)

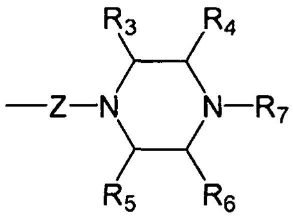

formula (3)

In said formula (2), X represents a direct bond, -S-, -O-, $-SO_2-$, -CO-, - $SO_2NR-$, -NR $SO_2-$, -CONR-, $-CH_2NRCOCH_2NR-$, or $-(CH_2)_kNH-$, provided that k represents an integer of 1 to 10; R represents a hydrogen atom, an optionally substituted alkyl group having 20 or fewer carbon atoms, an optionally substituted alkenyl group having 20 or fewer carbon atoms, or an optionally substituted aryl group having 20 or fewer carbon atoms; Y represents a direct bond, an optionally substituted alkylene group having 20 or fewer carbon atoms, an optionally substituted alkenylene group having 20 or fewer carbon atoms, an optionally substituted arylene group having 20 or fewer carbon atoms, an optionally substituted heterocycle comprising a nitrogen, oxygen, or sulfur atom, or $Y_1$-$Y_2$-$Y_3$-; $Y_1$ and $Y_3$ each independently represent an optionally substituted alkylene group having 20 or fewer carbon atoms, an optionally substituted alkenylene group having 20 or fewer carbon atoms, an optionally substituted arylene group having 20 or fewer carbon atoms, or an optionally substituted heterocycle comprising a nitrogen, oxygen, or sulfur atom; $Y_2$ represents a direct bond, -NR-, -O-, - $SO_2$-, or -CO-, and R is as defined above, provided that $Y_2$ is not a direct bond when $Y_1$ and $Y_3$ are the same group; $R_1$ and $R_2$ each independently represent an optionally substituted saturated or unsaturated alkyl group having 30 or fewer carbon atoms, or $R_1$ and $R_2$ together form an optionally substituted heterocycle comprising a nitrogen, oxygen, or sulfur atom.

In formula (3), Z is a direct bond, $-CH_2NR'COCH_2NR'-$, $-CH_2N-R'COCH_2NR'-G-$, -NR'-, -NR'-G-CO-, -NR'-G-CONR'-, $-NR'-G-SO_2-$, $-NR'-G-SO_2NR'-$, -O-G-CO-, -O-G-CONR'-, $-SO_2-$, $-O-G-SO_2-$, or $-O-G-SO_2NR'-$, where G represents an optionally substituted alkylene group having 20 or fewer carbon atoms, an optionally substituted alkenylene group having 20 or fewer carbon atoms, or an optionally substituted arylene group having 20 or fewer carbon atoms, and R' represents a hydrogen atom, an optionally substituted alkyl group having 20 or fewer carbon atoms, an optionally substituted alkenyl group having 20 or fewer carbon atoms, or an optionally substituted aryl group having 20 or fewer carbon atoms.

In formula (3), $R_3$, $R_4$, $R_5$, and $R_6$ each independently represent a hydrogen atom, an optionally substituted alkyl group having 20 or fewer carbon atoms, an optionally substituted alkenyl group having 20 or fewer carbon atoms, or an optionally substituted aryl group having 20 or fewer carbon atoms.

In formula (3), $R_7$ represents a hydrogen atom, an optionally substituted alkyl group having 20 or fewer carbon atoms, or an optionally substituted alkenyl group having 20 or fewer carbon atoms.

In a preferred embodiment of said pigment dispersant composition 3, the compound represented by formula (1) where n is 2 and m is 0 is represented by formula (4) below:

)24] The coloring composition of the present invention contains the
;ment composition of the present invention and a pigment carrier.
)25] The color filter of the present invention has a filter segment formed
m the coloring composition of the present invention.
vantageous Effects of Invention

In said formula (4), p represents an integer of 2 to 5; and $R_1$ and $R_2$ each independently represent an optionally substituted saturated or unsaturated alkyl group having 10 or fewer carbon atoms, or $R_1$ and $R_2$ together form an optionally substituted heterocycle comprising a nitrogen, oxygen, or sulfur atom.

The pigment composition of the present invention contains a pigment and the diketopyrrolopyrrole pigment dispersant of the present invention.

The coloring composition of the present invention contains the pigment composition of the present invention and a pigment carrier.

The color filter of the present invention has a filter segment formed from the coloring composition of the present invention.

Advantageous Effects of Invention

Use of the diketopyrrolopyrrole pigment dispersant of the present invention enables a pigment to be finely dispersed in a broad range of resins, and ink and paint having excellent non-aggregating properties, non-crystallinity, fluidity, coating film luster, sharpness, and storage stability to be readily obtained.

In particular, the diketopyrrolopyrrole pigment dispersant of the present invention exhibits a high level of sharpness (lightness) and excellent dispersibility for a group of red pigments such as diketopyrrolopyrrole-based red pigments, quinacridone-based red pigments, anthraquinone-based red pigments, and diketopyrrolopyrrole-based red pigments.

It is possible with the diketopyrrolopyrrole pigment dispersant of the present invention to provide a diketopyrrolopyrrole-based pigment finer than the pigment derivative described in patent document 1 that has been used in a pigment formation method for a diketopyrrolopyrrole-based pigment by salt milling.

The coloring composition containing the diketopyrrolopyrrole pigment dispersant of the present invention can be used in applications such as gravure ink; various types of generally used paint for automobiles, wood, metal; back coat paint for magnetic tape; radiation curable ink; ink jet printer ink; color filter ink.

Brief Description of Drawings

Fig. 1 is a chromatogram of pigment dispersant A.
Fig. 2 is a chromatogram of pigment dispersant B.
Fig. 3 is a chromatogram of pigment dispersant C.
Fig. 4 is a chromatogram of pigment dispersant D.

Description of Embodiments

<Diketopyrrolopyrrole pigment dispersant>

First, the diketopyrrolopyrrole pigment dispersant of the present invention will now be described. The diketopyrrolopyrrole pigment dispersant of the present invention is a compound represented by formula (1).

Here, examples of the optionally substituted alkyl group having 20 or fewer carbon atoms for R of formula (1) include a methyl group, an ethyl group, a propyl group, a butyl group, a hexyl group, an octyl group, a decyl group, a dodecyl group, an octadecyl group, an isopropyl group, an isobutyl group, a sec-butyl group, a tert-butyl group, a 1-ethylpentyl group, a cyclopentyl group, a cyclohexyl group, a trifluoromethyl group, a 2-ethylhexyl group, a phenacyl group, a 1-naphthoylmethyl group, a 2-naphthoylmethyl group, a 4-methylsulfanylphenacyl group, a 4-phenylsulfanylphenacyl group, a 4-dimethylaminophenacyl group, a 4-cyanophenacyl group, a 4-methylphenacyl group, a 2-methylphenacyl group, a 3-fluorophenacyl group, a 3-trifluoromethylphenacyl group, a 3-nitrophenacyl group, as well as those in which a hydrogen atom of such groups is substituted by a fluorine atom, a chlorine atom, a bromine atom, or a halogen, a hydroxyl group, a cyano group, a mercapto group, an alkenyl group, or an aryl group.

Examples of the optionally substituted alkenyl group having 20 or fewer carbon atoms for R of formula (1) include a vinyl group, a 1-propenyl group, a 2-propenyl group, an isopropenyl group, a 1-butenyl group, a 2-butenyl group, a 2-pentenyl group, a 2-methylallyl group, as well as those in which a hydrogen atom of such groups is substituted by a fluorine atom, a chlorine atom, a bromine atom, or a halogen, a hydroxyl group, a cyano group, a mercapto group, an alkyl group, or an aryl group.

Examples of the optionally substituted aryl group having 20 or fewer carbon atoms for R of formula (1) include a phenyl group, a biphenyl group, a 1-naphthyl group, a 2-naphthyl group, a 9-anthryl group, a 9-phenanthryl group, a 1-pyrenyl group, a 5-naphthacenyl group, a 1-indenyl group, a 2-azulenyl group, a 9-fluorenyl group, a terphenyl group, a quaterphenyl group, o$^-$, m$^-$, and p-tolyl groups, a xylyl group, o$^-$, m$^-$, and p-cumenyl groups, a mesityl group, a pentalenyl group, a binaphthalenyl group, a ternaphthalenyl group, a quarternaphthalenyl group, a heptalenyl group, a biphenylenyl group, an indacenyl group, a fluoranthenyl group, an acenaphthylenyl group, an aceanthrenyl group, a phenalenyl group, a fluorenyl group, an anthryl group, a bianthracenyl group, a teranthracenyl group, a quarteranthracenyl group, an anthraquinolyl group, a phenanthryl group, a triphenylenyl group, a pyrenyl group, a chrysenyl group, a naphthacenyl group, a pleiadenyl group, a picenyl group, a perylenyl group, a pentaphenyl group, a pentacenyl group, a tetraphenylenyl group, a hexaphenyl group, a hexacenyl group, a rubicenyl group, a coronenyl group, a trinaphthylenyl group, a heptaphenyl group, a heptacenyl group, a pyranthrenyl group, an ovalenyl group, as well as those in which a hydrogen atom of such groups is substituted by a fluorine atom, a chlorine atom, a bromine atom, or a halogen, a hydroxyl group, a cyano group, a mercapto group, an alkyl group, or an alkenyl group.

Examples of the optionally substituted alkylene group having 20 or fewer carbon atoms for Y of formula (1) include methylene, ethylene, trimethylene, tetramethylene, pentamethylene, hexamethylene, heptamethylene, octamethylene, nonamethylene, decamethylene, undecamethylene, dodecamethylene, tridecamethylene, tetradecamethylene, pentadecamethylene, hexadecamethylene, heptadecamethylene, octadecamethylene, nonadecamethylene, and icosamethylene as well as those in which a hydrogen atom of such groups is substituted by a fluorine atom, a chlorine atom, a bromine atom, or a halogen, a hydroxyl group, a cyano group, a mercapto group, an alkyl group, an alkenyl group, or an aryl group.

Examples of the optionally substituted alkenylene group having 20 or fewer carbon atoms for Y of formula (1) include vinylene, propenylene, butenylene, pentenylene, and hexenylene as well as those in which a hydrogen atom of such groups is substituted by a fluorine atom, a chlorine atom, a bromine atom, or a halogen, a hydroxyl group, a cyano

group, a mercapto group, an alkyl group, an alkenyl group, or an aryl group.

Examples of the optionally substituted arylene group having 20 or fewer carbon atoms for Y of formula (1) include benzene, naphthalene, anthracene, naphthacene, pyrene, phenanthrene, indene, azulene, perylene, fluorene, as well as those in which a hydrogen atom of such groups is substituted by a fluorine atom, a chlorine atom, a bromine atom, or a halogen, a hydroxyl group, a cyano group, a mercapto group, an alkyl group, an alkenyl group, or an aryl group.

Examples of the optionally substituted heterocycle for Y of formula (1) include rings that contain a nitrogen atom, an oxygen atom, or a sulfur atom as a constituent atom in addition to a carbon atom, and that may be or may not be aromatic. Such heterocycles may be fused with another aromatic ring or heterocycle.

Specific examples include thiophene, thiathrene, furan, pyran, isobenzofuran, chromene, xanthene, phenoxazine, pyrrole, pyrazole, isothiazole, isoxazole, pyrazine, pyrimidine, pyridazine, indolizine, isoindolizine, indole, indazole, purine, quinolizine, isoquinoline, phthalazine, naphthyridine, quinazolin, shinorine, pteridine, carbazole, carboline, phenanthrene, acridine, perimidine, phenanthroline, phthalazine, phenalzine, phenoxazine, furazan, phenoxazine as well as those in which a hydrogen atom of such groups is substituted by a fluorine atom, a chlorine atom, a bromine atom, or a halogen, a hydroxyl group, a cyano group, a mercapto group, an alkyl group, an alkenyl group, or an aryl group.

Examples of the optionally substituted saturated or unsaturated alkyl group having 30 or fewer carbon atoms for $R_1$ and $R_2$ of formula (1) include a methyl group, an ethyl group, a propyl group, a butyl group, a hexyl group, an octyl group, a decyl group, a dodecyl group, an octadecyl group, an isopropyl group, an isobutyl group, a sec-butyl group, a tert-butyl group, a 1-ethylpentyl group, a cyclopentyl group, a cyclohexyl group, a trifluoromethyl group, a 2-ethylhexyl group, a phenacyl group, a 1-naphthoylmethyl group, a 2-naphthoylmethyl group, a 4-methylsulfanylphenacyl group, a 4-phenylsulfanylphenacyl group, a 4-dimethylaminophenacyl group, a 4-cyanophenacyl group, a 4-methylphenacyl group, a 2-methylphenacyl group, a 3-fluorophenacyl group, a 3-trifluoromethylphenacyl group, a 3-nitrophenacyl group, as well as those in which a hydrogen atom of such groups is substituted by a fluorine atom, a chlorine atom, a bromine atom, or a halogen, a hydroxyl group, a cyano group, a mercapto group, an alkenyl group, or an aryl group.

Examples of the heterocycle that may be formed by $R_1$ and $R_2$ of formula (1) include rings that contain a nitrogen, oxygen, or sulfur atom as a constituent atom, and that may be or may not be aromatic.

Specific examples include thiophene, thiathrene, furan, pyran, isobenzofuran, chromene, xanthene, phenoxazine, pyrrole, pyrazole, isothiazole, isoxazole, pyrazine, pyrimidine, pyridazine, indolizine, isoindolizine, indole, indazole, purine, quinolizine, isoquinoline, phthalazine, naphthyridine, quinazolin, shinorine, pteridine, carbazole, carboline, phenanthrene, acridine, perimidine, phenanthroline, phthalazine, phenalzine, phenoxazine, furazan, phenoxazine, as well as those in which a hydrogen atom of such groups is substituted by a fluorine atom, a chlorine atom, a bromine atom, or a halogen, a hydroxyl group, a cyano group, a mercapto group, an alkyl group, an alkenyl group, or an aryl group.

Examples of the optionally substituted alkylene group having 20 or fewer carbon atoms for G of formula (1) include methylene, ethylene, trimethylene, tetramethylene, pentamethylene, hexamethylene, heptamethylene, octamethylene, nonamethylene, decamethylene, undecamethylene, dodecamethylene, tridecamethylene, tetradecamethylene, pentadecamethylene, hexadecamethylene, heptadecamethylene, octadecamethylene, nonadecamethylene, and icosamethylene as well as those in which a hydrogen atom of such groups is substituted by a fluorine atom, a chlorine atom, a bromine atom, or a halogen, a hydroxyl group, a cyano group, a mercapto group, an alkyl group, an alkenyl group, or an aryl group.

Examples of the optionally substituted alkenylene group having 20 or fewer carbon atoms for G of formula (1) include vinylene, propenylene, butenylene, pentenylene, and hexenylene as well as those in which a hydrogen atom of such groups is substituted by a fluorine atom, a chlorine atom, a bromine atom, or a halogen, a hydroxyl group, a cyano group, a mercapto group, an alkyl group, an alkenyl group, or an aryl group.

Examples of the optionally substituted arylene group having 20 or fewer carbon atoms for G of formula (1) include benzene, naphthalene, anthracene, naphthacene, pyrene, phenanthrene, indene, azulene, perylene, fluorene, as well as those in which a hydrogen atom of such groups is substituted by a fluorine atom, a chlorine atom, a bromine atom, or a halogen, a hydroxyl group, a cyano group, a mercapto group, an alkyl group, an alkenyl group, or an aryl group.

Examples of the optionally substituted alkyl group having 20 or fewer carbon atoms for R' of formula (1) include a methyl group, an ethyl group, a propyl group, a butyl group, a hexyl group, an octyl group, a decyl group, a dodecyl group, an octadecyl group, an isopropyl group, an isobutyl group, a sec-butyl group, a tert-butyl group, a 1-ethylpentyl group, a cyclopentyl group, a cyclohexyl group, a trifluoromethyl group, a 2-ethylhexyl group, a phenacyl group, a 1-naphthoylmethyl group, a 2-naphthoylmethyl group, a 4-methylsulfanylphenacyl group, a 4-phenylsulfanylphenacyl group, a 4-dimethylaminophenacyl group, a 4-cyanophenacyl group, a 4-methylphenacyl group, a 2-methylphenacyl group, a 3-fluorophenacyl group, a 3-trifluoromethylphenacyl group, a 3-nitrophenacyl group, as well as those in which a hydrogen atom of such groups is substituted by a fluorine atom, a chlorine atom, a bromine atom, or a halogen, a hydroxyl group, a cyano group, a mercapto group, an alkenyl group, or an aryl group.

Examples of the optionally substituted alkenyl group having 20 or fewer carbon atoms for R' of formula (1) include a vinyl group, a 1-propenyl group, a 2-propenyl group, an isopropenyl group, a 1-butenyl group, a 2-butenyl group, a 2-pentenyl group, a 2-methylallyl group, as well as those in which a hydrogen atom of such groups is substituted

by a fluorine atom, a chlorine atom, a bromine atom, or a halogen, a hydroxyl group, a cyano group, a mercapto group, an alkyl group, or an aryl group.

Examples of the optionally substituted aryl group having 20 or fewer carbon atoms for R' of formula (1) include a phenyl group, a biphenyl group, a 1-naphthyl group, a 2-naphthyl group, a 9-anthryl group, a 9-phenanthryl group, a 1-pyrenyl group, a 5-naphthacenyl group, a 1-indenyl group, a 2-azulenyl group, a 9-fluorenyl group, a terphenyl group, a quaterphenyl group, o-, m-, and p-tolyl groups, a xylyl group, o-, m-, and p-cumenyl groups, a mesityl group, a pentalenyl group, a binaphthalenyl group, a ternaphthalenyl group, a quarternaphthalenyl group, a heptalenyl group, a biphenylenyl group, an indacenyl group, a fluoranthenyl group, an acenaphthylenyl group, an aceanthrenyl group, a phenalenyl group, a fluorenyl group, an anthryl group, a bianthracenyl group, a teranthracenyl group, a quarteranthracenyl group, an anthraquinolyl group, a phenanthryl group, a triphenylenyl group, a pyrenyl group, a chrysenyl group, a naphthacenyl group, a pleiadenyl group, a picenyl group, a perylenyl group, a pentaphenyl group, a pentacenyl group, a tetraphenylenyl group, a hexaphenyl group, a hexacenyl group, a rubicenyl group, a coronenyl group, a trinaphthylenyl group, a heptaphenyl group, a heptacenyl group, a pyranthrenyl group, an ovalenyl group, as well as those in which a hydrogen atom of such groups is substituted by a fluorine atom, a chlorine atom, a bromine atom, or a halogen, a hydroxyl group, a cyano group, a mercapto group, an alkyl group, or an alkenyl group.

Examples of the optionally substituted alkyl group having 20 or fewer carbon atoms for $R_3$, $R_4$, $R_5$, and $R_6$ of formula (1) include a methyl group, an ethyl group, a propyl group, a butyl group, a hexyl group, an octyl group, a decyl group, a dodecyl group, an octadecyl group, an isopropyl group, an isobutyl group, a sec-butyl group, a tert-butyl group, a 1-ethylpentyl group, a cyclopentyl group, a cyclohexyl group, a trifluoromethyl group, a 2-ethylhexyl group, a phenacyl group, a 1-naphthoylmethyl group, a 2-naphthoylmethyl group, a 4-methylsulfanylphenacyl group, a 4-phenylsulfanylphenacyl group, a 4-dimethylaminophenacyl group, a 4-cyanophenacyl group, a 4-methylphenacyl group, a 2-methylphenacyl group, a 3-fluorophenacyl group, a 3-trifluoromethylphenacyl group, a 3-nitrophenacyl group, as well as those in which a hydrogen atom of such groups is substituted by a fluorine atom, a chlorine atom, a bromine atom, or a halogen, a hydroxyl group, a cyano group, a mercapto group, an alkenyl group, or an aryl group.

Examples of the optionally substituted alkenyl group having 20 or fewer carbon atoms for $R_3$, $R_4$, $R_5$, and $R_6$ of formula (1) include a vinyl group, a 1-propenyl group, a 2-propenyl group, an isopropenyl group, a 1-butenyl group, a 2-butenyl group, a 2-pentenyl group, a 2-methylallyl group, as well as those in which a hydrogen atom of such groups is substituted by a fluorine atom, a chlorine atom, a bromine atom, or a halogen, a hydroxyl group, a cyano group, a mercapto group, an alkyl group, or an aryl group.

Examples of the optionally substituted aryl group having 20 or fewer carbon atoms for $R_3$, $R_4$, $R_5$, and $R_6$ of formula (1) include a phenyl group, a biphenyl group, a 1-naphthyl group, a 2-naphthyl group, a 9-anthryl group, a 9-phenanthryl group, a 1-pyrenyl group, a 5-naphthacenyl group, a 1-indenyl group, a 2-azulenyl group, a 9-fluorenyl group, a terphenyl group, a quaterphenyl group, o-, m-, and p-tolyl groups, a xylyl group, o-, m-, and p-cumenyl groups, a mesityl group, a pentalenyl group, a binaphthalenyl group, a ternaphthalenyl group, a quarternaphthalenyl group, a heptalenyl group, a biphenylenyl group, an indacenyl group, a fluoranthenyl group, an acenaphthylenyl group, an aceanthrenyl group, a phenalenyl group, a fluorenyl group, an anthryl group, a bianthracenyl group, a teranthracenyl group, a quarteranthracenyl group, an anthraquinolyl group, a phenanthryl group, a triphenylenyl group, a pyrenyl group, a chrysenyl group, a naphthacenyl group, a pleiadenyl group, a picenyl group, a perylenyl group, a pentaphenyl group, a pentacenyl group, a tetraphenylenyl group, a hexaphenyl group, a hexacenyl group, a rubicenyl group, a coronenyl group, a trinaphthylenyl group, a heptaphenyl group, a heptacenyl group, a pyranthrenyl group, an ovalenyl group, as well as those in which a hydrogen atom of such groups is substituted by a fluorine atom, a chlorine atom, a bromine atom, or a halogen, a hydroxyl group, a cyano group, a mercapto group, an alkyl group, or an alkenyl group.

Examples of the optionally substituted alkyl group having 20 or fewer carbon atoms for $R_7$ of formula (1) include a methyl group, an ethyl group, a propyl group, a butyl group, a hexyl group, an octyl group, a decyl group, a dodecyl group, an octadecyl group, an isopropyl group, an isobutyl group, a sec-butyl group, a tert-butyl group, a 1-ethylpentyl group, a cyclopentyl group, a cyclohexyl group, a trifluoromethyl group, a 2-ethylhexyl group, a phenacyl group, a 1-naphthoylmethyl group, a 2-naphthoylmethyl group, a 4-methylsulfanylphenacyl group, a 4-phenylsulfanylphenacyl group, a 4-dimethylaminophenacyl group, a 4-cyanophenacyl group, a 4-methylphenacyl group, a 2-methylphenacyl group, a 3-fluorophenacyl group, a 3-trifluoromethylphenacyl group, a 3-nitrophenacyl group, as well as those in which a hydrogen atom of such groups is substituted by a fluorine atom, a chlorine atom, a bromine atom, or a halogen, a hydroxyl group, a cyano group, a mercapto group, an alkenyl group, or an aryl group.

Examples of the optionally substituted alkenyl group having 20 or fewer carbon atoms for $R_7$ of formula (1) include a vinyl group, a 1-propenyl group, a 2-propenyl group, an isopropenyl group, a 1-butenyl group, a 2-butenyl group, a 2-pentenyl group, a 2-methylallyl group, as well as those in which a hydrogen atom of such groups is substituted by a fluorine atom, a chlorine atom, a bromine atom, or a halogen, a hydroxyl group, a cyano group, a mercapto group, an alkyl group, or an aryl group.

Among the diketopyrrolopyrrole pigment dispersants of the present invention, preferable pigment dispersants are diketopyrrolopyrrole pigment dispersants represented by formula (4) below.

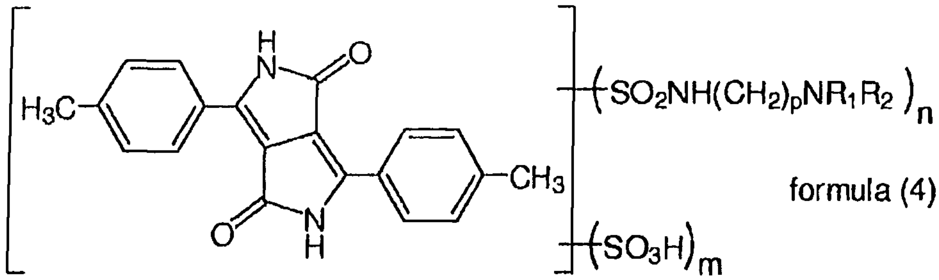

formula (4)

In formula (4), p represents an integer of 2 to 5. $R_1$ and $R_2$ each independently represent an optionally substituted saturated or unsaturated alkyl group having 10 or fewer carbon atoms. In certain embodiments $R_1$ and $R_2$ together may form an optionally substituted heterocycle containing a nitrogen, oxygen, or sulfur atom.

Particularly preferable pigment dispersants are compounds of formula (4) above having a structure wherein $R_1$ and $R_2$ each independently is an optionally substituted saturated or unsaturated alkyl group having 5 or fewer carbon atoms.

<Method for producing diketopyrrolopyrrole pigment dispersant>

There are several synthesizing routes for producing the diketopyrrolopyrrole pigment dispersant of the present invention. Using a pigment dispersant represented by formula (5) below as an example, an outline of a typical method for producing a pigment dispersant represented by formula (5) is presented below.

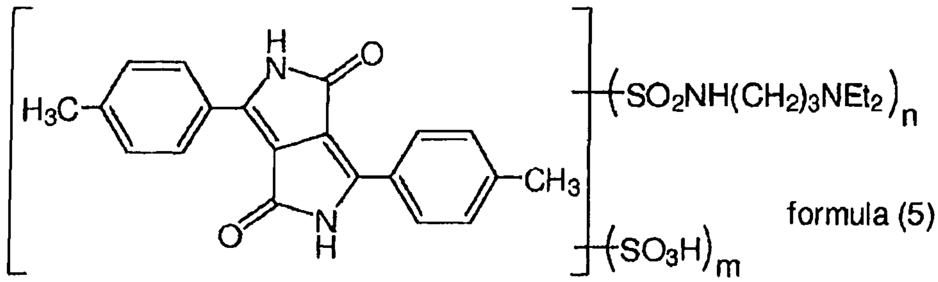

formula (5)

First, a diketopyrrolopyrrole pigment represented by formula (6) below is reacted with fuming sulfuric acid for sulfonation to produce a compound represented by formula (7) below. Then, the compound represented by formula (7) below is reacted with a chlorinating agent to produce a compound represented by formula (8) below. Next, the compound represented by formula (8) below is reacted with diethylaminopropylamine and heated to produce a compound represented by formula (5) above.

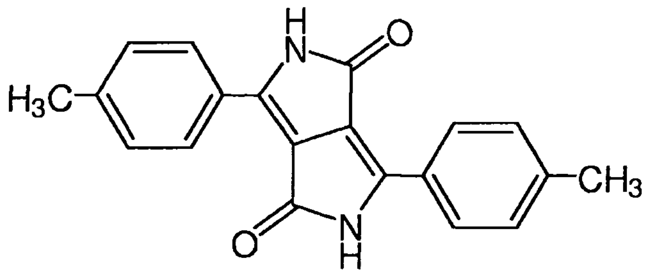

formula (6)

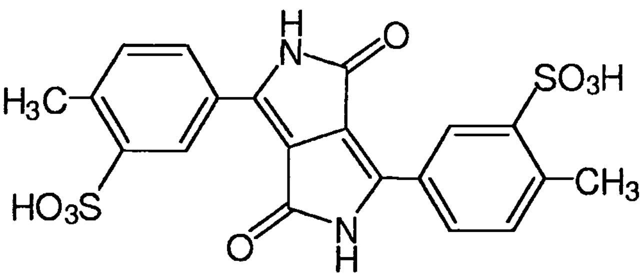

formula (7)

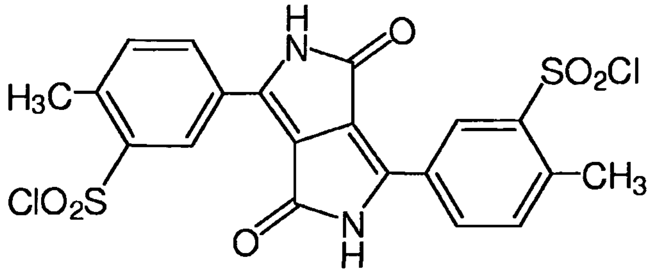

formula (8)

In place of diethylaminopropylamine, use of other amine components enables formation of various basic groups E.

Examples of other amine components include dimethylamine, N-ethylisopropylamine, N-methylbutylamine, N-methylisobutylamine, N-butylethylamine, N-tert-butylethylamine, diisopropylamine, dipropylamine, N-sec-butylpropylamine, dibutylamine, di-sec-butylamine, diisobutylamine, N-isobutyl-sec-butylamine, diamylamine, diisoamylamine, dihexylamine, di(2-ethylhexyl)amine, dioctylamine, N-methyloctadecylamine, didecylamine, diallylamine, N-ethyl-1,2-dimethylpropylamine, N-methylhexylamine, 2-hydroxymethylaminoethanol, dioleoylamine, distearylamine, N,N-dimethylaminomethylamine, N,N-dimethylaminoethylamine, N,N-dimethylaminopropylamine, N,N-dimethylaminoamylamine, N,N-dimethylaminobutylamine, N,N-diethylaminoethylamine, N,N-diethylaminopropylamine, N,N-diethylaminohexylamine, N,N-diethylaminobutylamine, N,N-dimethylaminopentylamine, N,N-dipropylaminobutylarnine, N,N-dibutylaminopropylamine, N,N-dibutylaminoethylamine, N,N-dibutylaminobutylamine, N,N-diisobutylaminopentylamine, N,N-methyl-laurylaminopropylamine, N,N-ethyl-hexylaminoethylamine, N,N-distearylaminoethylamine, N,N-dioleoylaminoethylamine, N,N-distearylaminobutylamine, piperidine, 2-pipecoline, 3-pipecoline, 4-pipecoline, 2,4-lupetidine, 2,6-lupetidine, 3,5-lupetidine, 3-piperidinemethanol, pipecolinic acid, isonipecotic acid, methyl isonipecotate, ethyl isonipecotate, 2-pyridinemethanol, pyrrolidine, 3-hydroxypyrrolidine, N-aminoethylpiperidine, N-aminoethyl-4-pipecoline, N-aminoethylmorpholine, N-aminopropylpiperidine, N-aminopropyl-2-pipecoline, N-aminopropyl-4-pipecoline, N-aminopropylmorpholine, N-methylpiperazine, N-butylpiperazine, N-methylhomopiperazine, 1-cyclopentylpiperazine, 1-amino-4-methylpiperazine, 1-cyclopentylpiperazine.

<Specific examples of diketopyrrolopyrrole pigment dispersant>

Specific examples of the diketopyrrolopyrrole pigment dispersant of the present invention are as shown below.

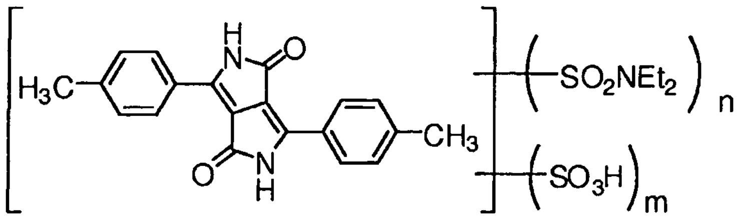

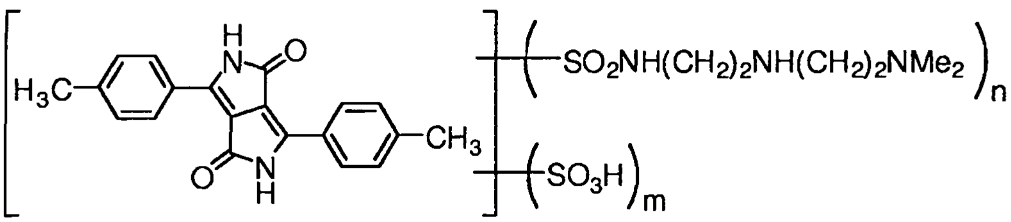

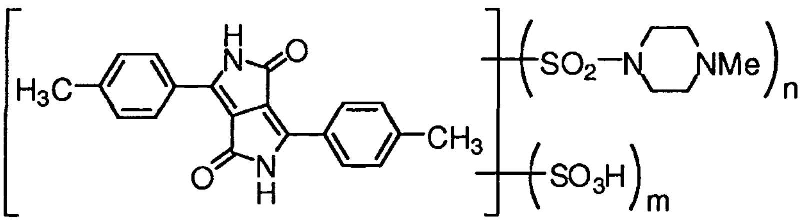

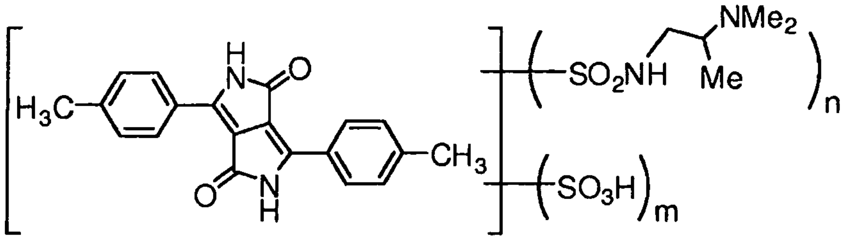

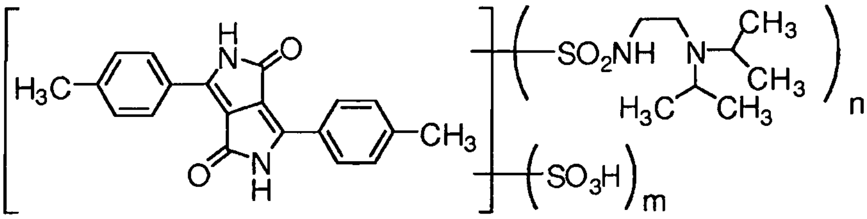

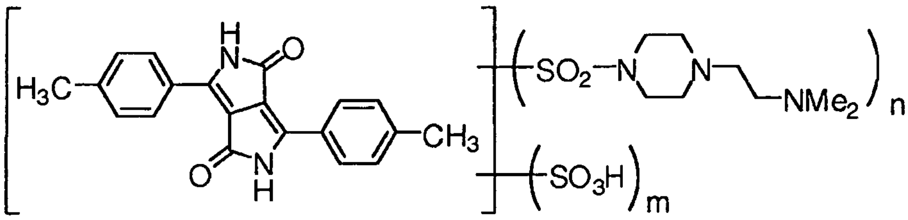

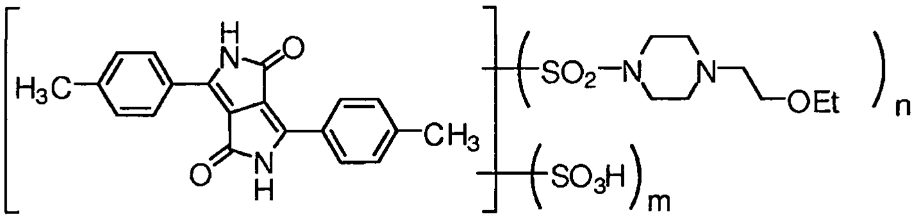

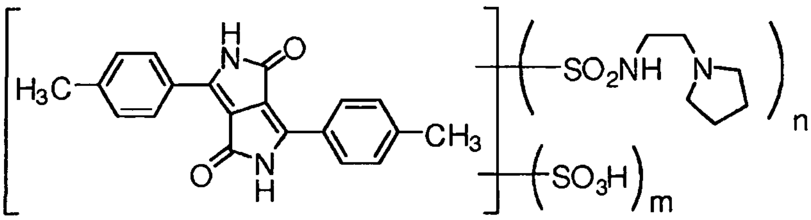

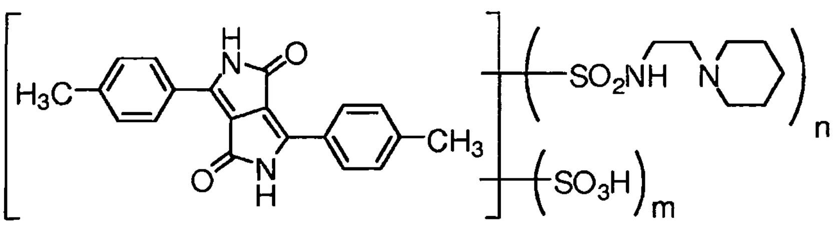

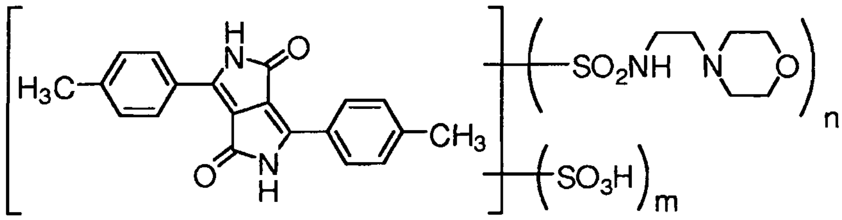

[0065]

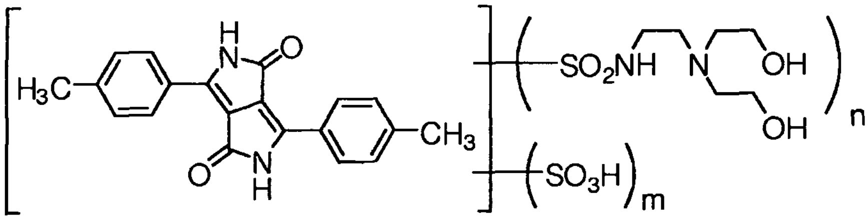

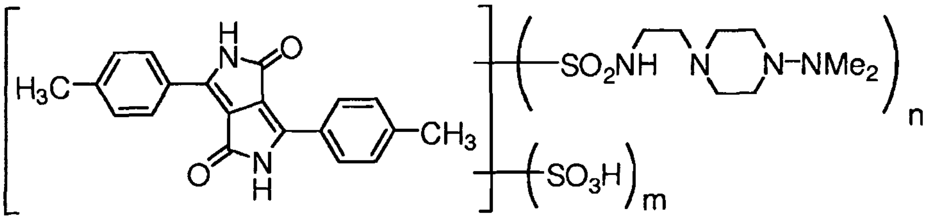

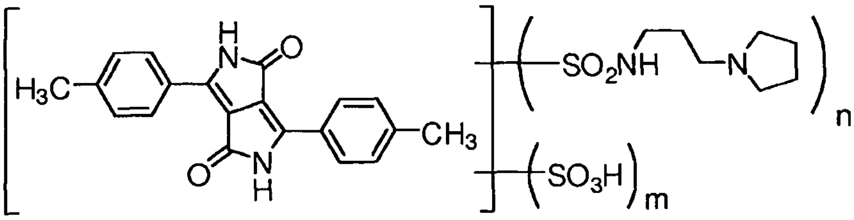

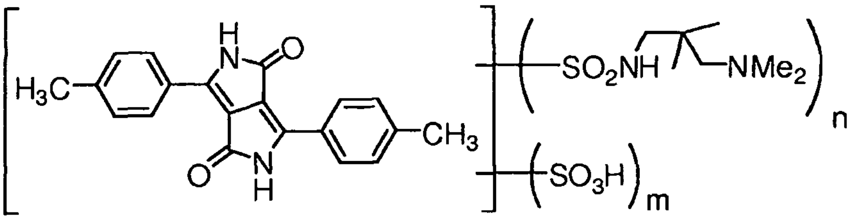

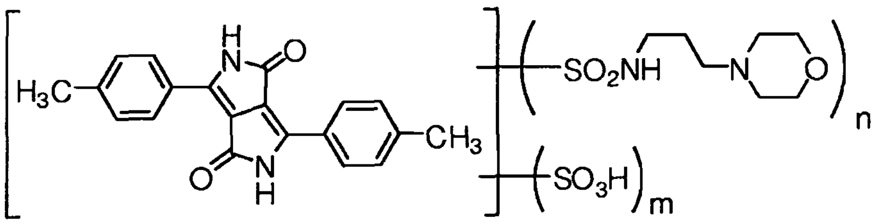

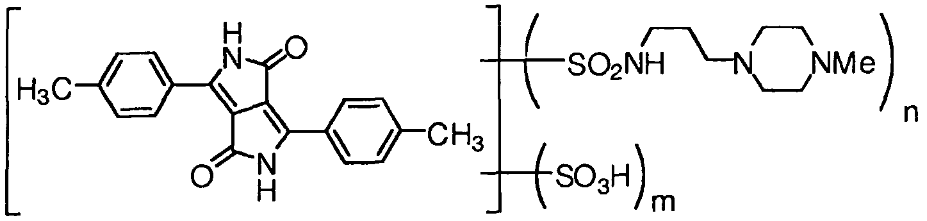

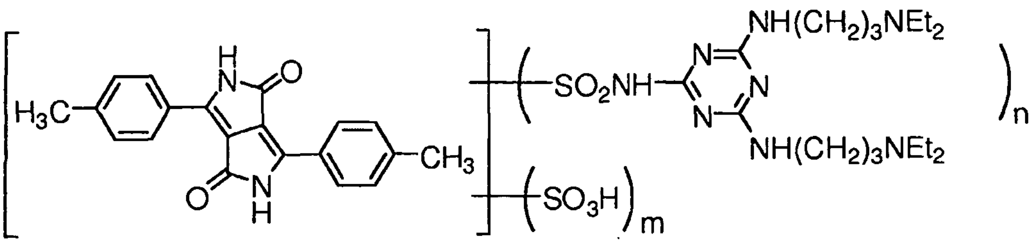

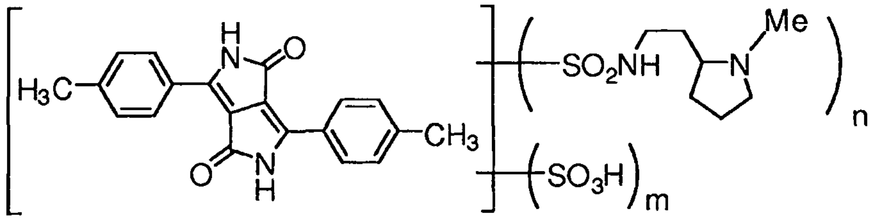

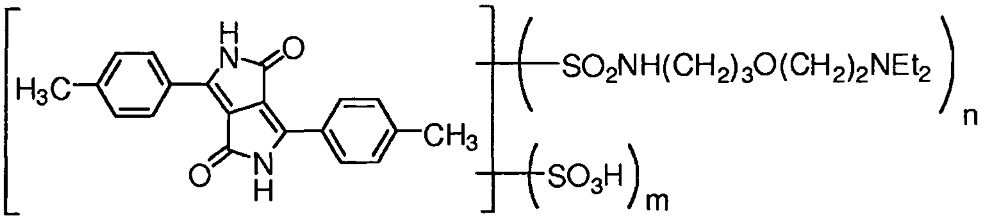

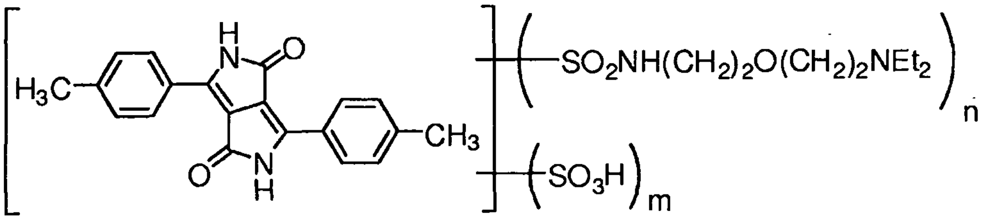

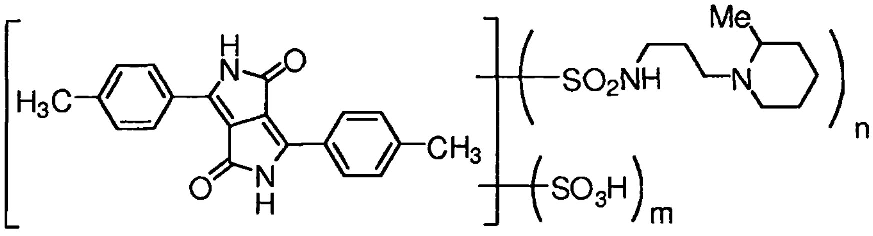

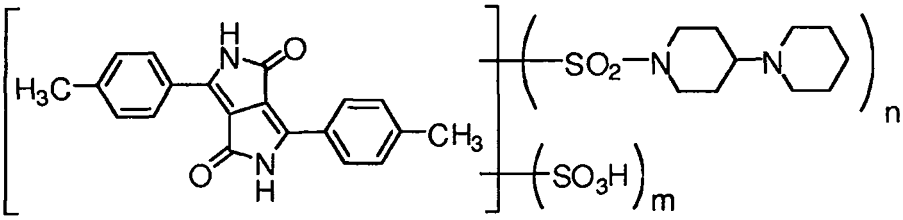

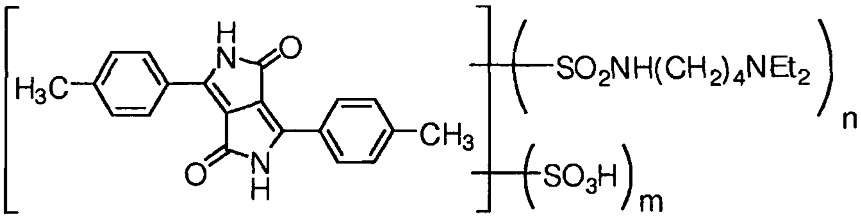

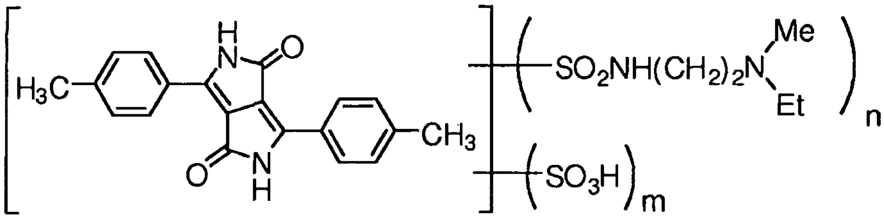

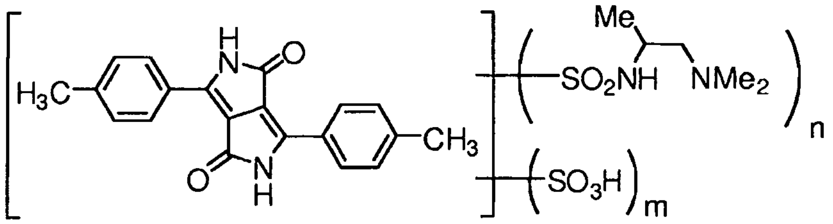

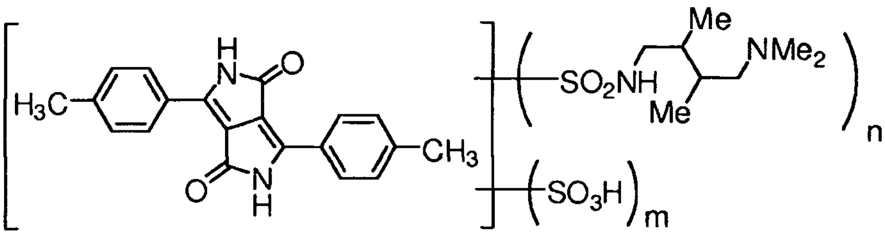

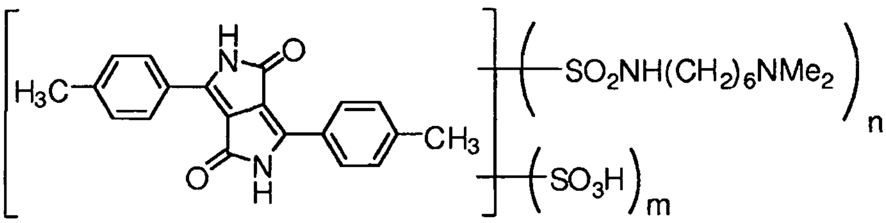

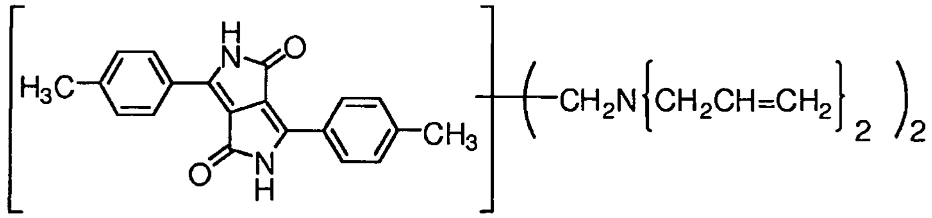

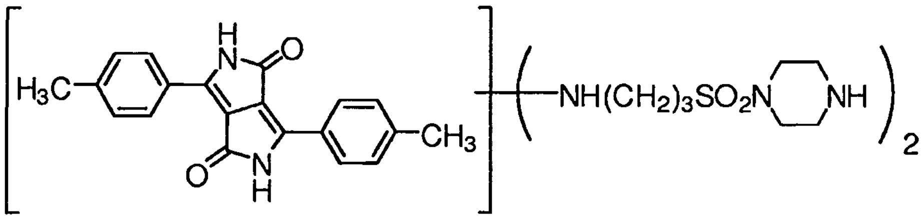

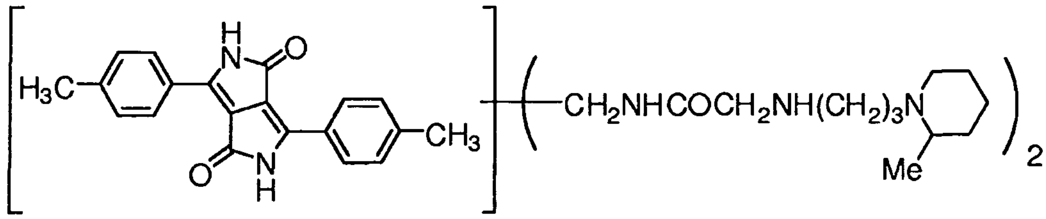

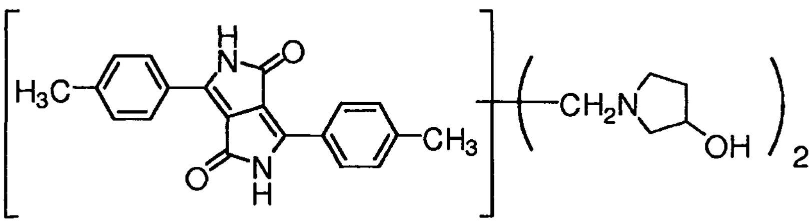

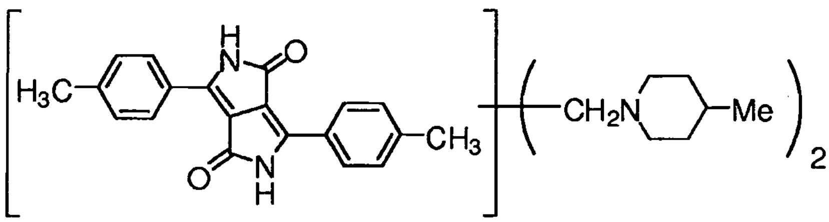

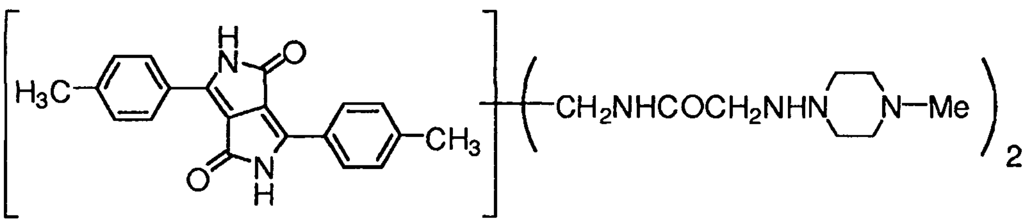

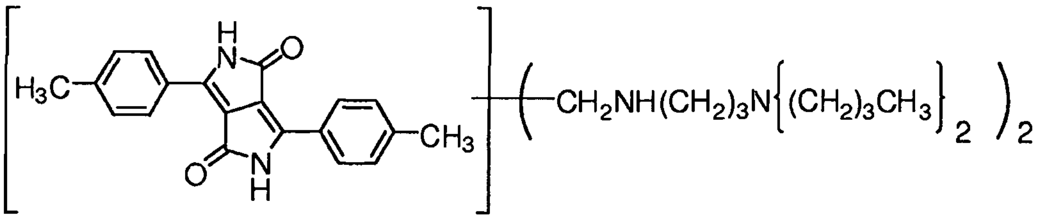

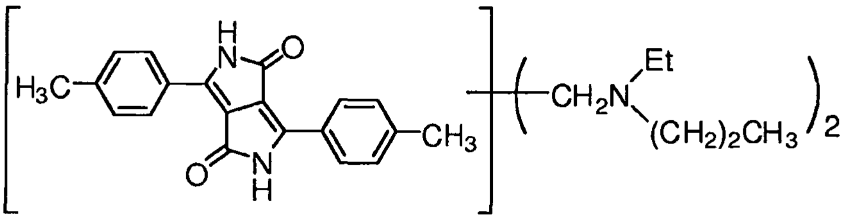

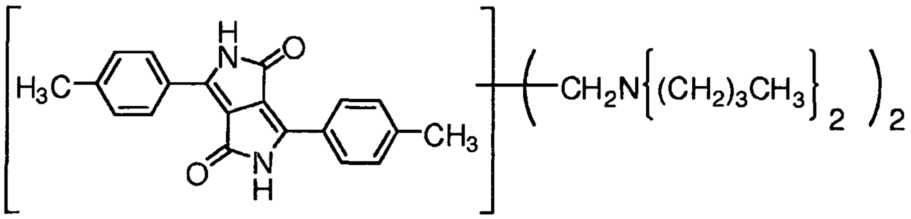

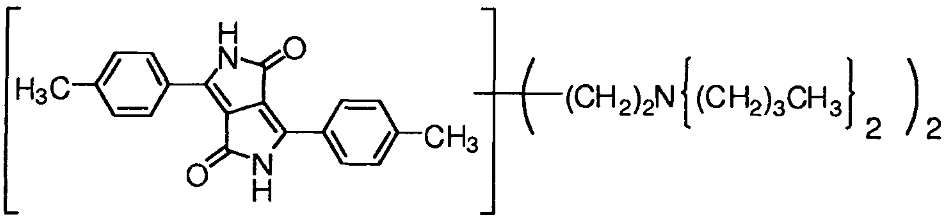

<Pigment composition>

Next, the pigment composition of the present invention will now be described. The pigment composition of the present invention contains a pigment and the diketopyrrolopyrrole pigment dispersant of the present invention.

For the pigment contained in the pigment composition, various organic pigments or inorganic pigments that are commercially available in general can be used.

Examples of organic pigments include azo-based, anthanthrone-based, anthrapyrimidine-based, anthraquinone-based, isoindolinone-based, isoindoline-based, indanthrone-based, quinacridone-based, quinophthalone-based, dioxazine-based, diketopyrrolopyrrole-based, thiazineindigo-based, thioindigo-based, pyranthrone-based, phthalocyanine-based, flavanthrone-based, perinone-based, perylene-based, benzimidazolone-based organic pigments. Examples of inorganic pigments include carbon black, titanium oxide, chrome yellow, cadmium yellow, cadmium red, red iron oxide, iron black, zinc white, iron blue, ultramarine blue. These pigments may be used in combination.

When used with a pigment having an identical or similar chemical structure, the diketopyrrolopyrrole pigment dispersant can effectively enhance non-aggregating properties, non-crystallinity and fluidity. In terms of hue, the diketopyrrolopyrrole pigment dispersant is preferably used with a pigment having a color in the range of yellow to red, and more preferably with a pigment having a color in the range of orange to red.

In particular, it is preferable to use the diketopyrrolopyrrole pigment dispersant in red pigments represented by diketopyrrolopyrrole-based red pigments, quinacridone-based red pigments, thiazineindigo-based red pigments, and anthraquinone-based red pigments.

The amount of the diketopyrrolopyrrole pigment dispersant contained in the pigment composition is preferably 0.1 to 30 parts by weight and more preferably 1 to 20 parts by weight relative to 100 parts by weight of the pigment. When the diketopyrrolopyrrole pigment dispersant content is less than 0.1 parts by weight, the effect of the diketopyrrolopyrrole pigment dispersant added is barely obtained, and when exceeding 30 parts by weight, not only the effect

resulting from the pigment dispersant added is not obtained, but also the difference between the physical properties of the resulting pigment composition and the pigment alone is large, sometimes resulting in a problem in practical quality when the pigment composition is used for ink or paint.

While a sufficient dispersing effect is obtained even when the pigment composition is prepared by mere mixing of pigment powder and diketopyrrolopyrrole pigment dispersant powder, an even better result can be obtained when the pigment composition is prepared by the following method. Examples of a pigment composition preparation method other than a powder mixing method include a method in which pigment powder and pigment dispersant powder are mechanically mixed using various types of pulverizer such as a dissolver, a high-speed mixer, a homomixer, a kneader, a roll mill,
an attritor, and a sand mill; a method in which a solution containing a pigment dispersant is added to a suspension system of a pigment formed by an aqueous or organic solvent to deposit the pigment dispersant on the pigment surface; and a method in which an organic pigment and a pigment dispersant are codissolved in a solvent having strong dissolving power such as sulfuric acid, and then coprecipitated by a poor solvent such as water.

<Coloring composition>

Next, the coloring composition of the present invention will now be described. The coloring composition of the present invention contains the diketopyrrolopyrrole pigment composition of the present invention and a pigment carrier.

The pigment carrier is composed of a resin, a precursor thereof, or a mixture of those. In the case where a color filter is produced using the coloring composition, it is preferable to use, as such a resin, a transparent resin having a transmittance of 80% or greater, and in particular 95% or greater, in the entire wavelength region of 400 to 700 nm of the visible light region.

Examples of resins include thermoplastic resins, thermosetting resins, and photosensitive resins. Examples of resin precursors include monomers or oligomers that are cured by exposure to radiation and generate resins. These can be used singly or as a combination of two or more.

The pigment carrier can be used in an amount of 30 to 700 parts by weight and preferably 60 to 450 parts by weight relative to 100 parts by weight of the pigment composition in the coloring composition. In the case where a mixture of a resin and a precursor thereof is used as the pigment carrier, the resin can be used in an amount of 20 to 400 parts by weight and preferably 50 to 250 parts by weight relative to 100 parts by weight of the pigment composition in the coloring composition. The resin precursor can be used in an amount of 10 to 300 parts by weight and preferably 10 to 200 parts by weight relative to 100 parts by weight of the pigment composition in the coloring composition.

Examples of thermoplastic resins include butyral resin, styrene-maleic acid copolymer, chlorinated polyethylene, chlorinated polypropylene, polyvinyl chloride, vinyl chloride-vinyl acetate copolymer, polyvinyl acetate, polyurothane-based resin, polyester resin, acryl-based resin, alkyd resin, polystyrene, polyamide resin, rubber-based resin, cyclized rubber-based resin, celluloses, polyethylene, polybutadiene, polyimide resin.

Examples of thermosetting resins include epoxy resin, benzoguanamine resin, rosin-modified maleic acid resin, rosin-modified fumaric acid resin, melamine resin, urea resin, phenol resin.

For a photosensitive resin, used is a resin prepared by reacting a polymer having a reactive substituent such as a hydroxyl group, a carboxyl group, or an amino group with a (meth)acrylic compound or cinnamic acid having a reactive substituent such as an isocyanate group, an aldehyde group, or an epoxy group to introduce an optically crosslinkable group such as a (meth)acryloyl group or a styryl group in the polymer. Also, a resin prepared by processing a linear polymer containing an acid anhydride such as a styrene-maleic anhydride copolymer or an $\alpha$-olefin-maleic anhydride copolymer into a half ester by a (meth)acrylic compound having a hydroxyl group, such as hydroxyalkyl (meth)acrylate, is used.

Examples of resin precursor monomers and oligomers include methyl (meth)acrylate, ethyl (meth)acrylate, 2-hydroxyethyl (meth)acrylate, 2-hydroxypropyl (meth)acrylate, cyclohexyl (meth)acrylate, ß-carboxyethyl

(meth)acrylate, polyethylene glycol di(meth)acrylate, 1,6-hexanediol di(meth)acrylate, triethylene glycol di(meth)acrylate, tripropyleneglycol di(meth)acrylate, trimethylolpropane tri(meth)acrylate, pentaerythritol tri(meth)acrylate, 1,6-hexanediol diglycidyl ether (meth)acrylate, bisphenol A diglycidyl ether di(meth)acrylate, neopentyl glycol diglycidyl ether di(meth)acrylate, dipentaerythritol hexa(meth)acrylate, tricyclodecanyl (meth)acrylate, ester acrylate, (meth)acrylic ester of hydroxymethylated melamine, epoxy (meth)acrylate, urethane acrylate, and various like acrylates and methacrylates, (meth)acrylic acid, styrene, vinyl acetate, hydroxyethyl vinyl ether, ethylene glycol divinyl ether, pentaerythritol trivinyl ether, (meth)acrylamide, N-hydroxymethyl (meth)acrylamide, N-vinylformamide, acrylonitrile.

A dispersion aid such as a surfactant or a resinous pigment dispersant can be suitably contained in the coloring composition to enhance the dispersibility of the pigment in the pigment carrier. The dispersion aid can be used in an amount of 0.1 to 40 parts by weight and preferably 0.1 to 30 parts by weight relative to 100 parts by weight of the pigment composition in the coloring composition.

Examples of surfactants include polyoxyethylene alkyl ether sulfuric acid salts, sodium dodecylbenzenesulfonate, alkali salts of a styrene-acrylic acid copolymer, sodium alkylnaphthalenesulfonate, sodium alkyl diphenyl ether disulfonate, lauryl sulfate monoethanolamine, lauryl sulfate triethanolamine, lauryl sulfate ammonium, stearic acid monoethanolamine, sodium stearate, sodium lauryl sulfate, monoethanolamine of a styrene-acrylic acid copolymer, polyoxyethylene alkyl ether phosphoric acid esters, as anionic surfactants; polyoxyethylene oleyl ether, polyoxyethylene lauryl ether, polyoxyethylene nonylphenyl ether, polyoxyethylene alkyl ether phosphoric acid esters, polyoxyethylenesorbitan monostearate, polyethylene glycol monolaurate, as nonionic surfactants; alkyl quaternary ammonium salts, ethyleneoxide adducts thereof, as cationic surfactants; alkyl betaines such as alkyl dimethylamino acetic acid betaine, alkyl imidazoline, as ampholytic surfactants; and fluorine-based and silicone-based surfactants.

The resinous pigment dispersant is a resin that has a pigment affinity portion that has properties to be adsorbed on a pigment and a portion that has compatibility with a pigment carrier, and by being adsorbed on a pigment, the resinous pigment dispersant serves to stabilize dispersion of the pigment in the pigment carrier. Examples of the resinous pigment dispersant include those composed of polyester-based, acryl-based, or urethane-based linear or comb-like resins, and preferable are those that have a basic group, an acidic group, an aromatic group, or a like group in a block or random manner in the main chain or at the terminal of linear resins or in the main chain or a side chain of comb-like resins.

Examples of commercially available resinous pigment dispersants include Polyflows No.75, No.90, and No.95 (manufactured by Kyoeisha Yushi Kagaku Kogyo Co., Ltd), Megafacs F171, F172, and F173 (manufactured by Dainippon Ink and Chemicals), Fluorads FC430 and FC431 (manufactured by Sumitomo 3M Limited), various Solsperse dispersants such as Solsperses 13240, 20000, 24000, 26000, and 28000 (manufactured by Avecia), various Disperbyk dispersants such as Disperbyks 111, 160, 161, 162, 163, 164, 170, 182, 2000, and 2001 (manufactured by BYK Chemie), various Ajisper dispersants such as Ajispers PB711, PB411, PB111, PB814, PB821, and PB822 (manufactured by Ajinomoto Fine-Techno Co., Ltd.), EFKA dispersants such as EFKAs 46 and 47 (manufactured by EFKA Chemicals).

In the case where the coloring composition is cured by photoirradiation by ultraviolet radiation or the like, a photopolymerization initiator is added.

Used as photopolymerization initiators are 4-phenoxydichloroacetophenone, 4-tert-butyl-dichloroacetophenone, diethoxyacetophenone, 1-(4-isopropylphenyl)-2-hydroxy-2-methylpropan-1-one, 1-hydroxycyclohexyl phenyl ketone, 2-benzyl-2-dimethylamino-1-(4-morpholinophenyl)-butan-1-one, and like acetophenone-based photopolymerization initiators, benzoin, benzoin methyl ether, benzoin ethyl ether, benzoin isopropyl ether, benzyl dimethyl ketal, and like benzoin-based photopolymerization initiators, benzophenone, benzoylbenzoic acid, methyl benzoylbenzoate, 4-phenylbenzophenone, hydroxybenzophenone, acrylated benzophenone, 4-benzoyl-4'-methyldiphenyl sulfide, and like benzophenone-based photopolymerization initiators, thioxanthone, 2-chlorothioxanthone, 2-methylthioxanthone, isoprophylthioxanthone, 2,4-diisopropylthioxanthone, and like thioxanthone-based photopolymerization initiators, 2,4,6-trichloro-s-triazine, 2-phenyl-4,6-bis(trichloromethyl)-s-triazine, 2-(p-methoxypheny)-4,6-bis(trichloromethyl)-s-triazine, 2-(p-tolyl)-4,6-bis(trichloromethyl)-s-triazine, 2-piperonyl-4,6-bis(trichloromethyl)-s-triazine, 2,4-bis(trichloromethyl)-6-styryl-s-triazine, 2-(naphtho-1-yl)-4,6-bis(trichloromethyl)-s-triazine, 2-(4-methoxy-naphtho-1-yl)-4,6-bis(trichloromethyl)-s-triazine, 2,4-trichloromethyl-(piperonyl)-6-triazine, 2,4-trichloromethyl-(4'-methoxystyryl)-6-triazine, and like triazine-based photopolymerization initiators, borate-based photopolymerization initiators, carbazole-based photopolymerization initiators, imidazole-based photopolymerization initiators. The photopolymerization initiator can be used in an amount of 5 to 200 parts by weight and preferably 10 to 150 parts by weight relative to 100 parts by weight of the pigment composition in the coloring composition.

The aforementioned photopolymerization initiators can be used singly or as a mixture of two or more. It is possible to concomitantly use, as a sensitizer, a compound such as an α-acyloxime ester, acylphosphine oxide, methylphenylglyoxylate, benzyl, 9,10-phenanthrenequinone, camphorquinone, ethylanthraquinone, 4,4'-diethylisophthalophenone, 3,3',4,4'-tetra(tert-butylperoxycarbonyl)benzophenone, or 4,4'-diethylaminobenzophenone. The sensitizer can be used in an amount of 0.1 to 60 parts by weight relative to 100 parts by weight of the photopolymerization initiator in the coloring composition.

A solvent can be contained in the coloring composition to sufficiently disperse the pigment in the pigment carrier and help ease the formation of a uniform film. Examples of solvents include cyclohexanone, propylene glycol diacetate, propylene glycol monomethyl ether, diethylene glycol diethyl ether, methyl isobutyl ketone, n-butyl alcohol, dipropylene glycol monomethyl ether, tripropylene glycol monomethyl ether, propylene glycol monopropyl ether, dipropyleneglycol monopropyl ether, propylene glycol monobutyl ether, dipropylene glycol monobutyl ether, tripropylene glycol monobutyl ether, propylene glycol phenyl ether, dipropylene glycol monomethyl ether acetate, 1,3-buthylene glycol diacetate, ethylene glycol monobutyl ether, ethylene glycol monobutyl ether acetate, diethylene glycol monobutyl ether, diethylene glycol monobutyl ether acetate, 3-methoxybutanol, 1,3-buthylene glycol, triacetin, 3,3,5-trimethyl-2-cyclohexen-1-one, ethylene glycol monoethyl ether, γ-butyrolactone, isoamyl acetate, ethyl 3-ethoxypropionate, propylene glycol monomethyl ether acetate, toluene, o-xylene, m-xylene, p-xylene, methyl 3-methoxypropionate, butyl acetate, isobutyl acetate, propyl acetate. These solvents can be used singly or as a combination.

The solvent can be used in a total amount of 800 to 4000 parts by weight and preferably 1000 to 2500 parts by weight relative to 100 parts by weight of the pigment composition in the coloring composition.

A storage stabilizer can be contained in the coloring composition to stabilize the viscosity over time of the composition. Also, an adhesion improver such as a silane coupling agent can be contained to enhance adhesion to the substrate.

If necessary, an additive such as a thermal polymerization inhibitor, a plasticizer, a surface protecting agent, a lubricating agent, a coating aid, an adhesion improver, a coatability improver, or a development improving agent can be added to the coloring composition as long as the effects of the present invention are not impaired.

The coloring composition can be produced by finely dispersing the pigment composition of the present invention, together with the aforementioned dispersion aid and photopolymerization initiator as necessary, in a pigment carrier and an organic solvent using a variety of dispersing means such as a triple roll mill, a double roll mill, a horizontal sand mill, a vertical sand mill, an annular gap bead mill, a kneader, or an attritor. Also, a coloring composition containing two or more pigments can be produced by finely dispersing the respective pigments separately in pigment carriers and organic solvents using the diketopyrrolopyrrole pigment dispersant of the present invention and mixing the dispersions.

Regarding the coloring composition, all the components constituting the coloring composition may be mixed first and then dispersed, but it is preferable that, first, the pigment and the diketopyrrolopyrrole pigment dispersant are dispersed in a part of a resin and/or an organic solvent, and then the remaining components are added and dispersed.

Also, prior to carrying out dispersion with a horizontal sand mill, a vertical sand mill, an annular gap bead mill, an attritor, or the like, pre-dispersion using a mill mixer such as a kneader or a triple roll mill, solid dispersion by a double roll mill or the like, or a diketopyrrolopyrrole pigment dispersant treatment on a pigment may be carried out. Also, after dispersion with a bead mill or the like, performing an after-treatment called aging that involves storage for several hours to one week while heating at 30 to 80°C or an after-treatment using an ultrasonic disperser or a collision-type beadless disperser is effective for the stability of the coloring composition. In addition, a microfluidizer, a high-speed mixer, a homomixer, a ball mill, a roll mill, a stone mill, an ultrasonic disperser, and any such dispersers and mixers can be used to produce the coloring composition of the present invention.

In the case where the coloring composition is used to produce a color filter, it is preferable to remove, by a means of centrifugal separation, a sintered filter, a membrane filter, or the like, coarse particles larger than or equal to 5 μm, preferably coarse particles larger than or equal to 1 μm, and more preferably coarse particles larger than or equal to 0.5 μm as well as the dust contained therein.

The coloring composition of the present invention can be prepared as gravure offset printing ink, dry offset printing ink, silk screen printing ink, or a solvent developable or alkaline developable coloring resist material. The solvent developable or alkaline developable coloring resist material is a dispersion in which the pigment composition of the present invention is dispersed in a composition containing a thermoplastic resin, a thermosetting resin, or a photosensitive resin serving as a pigment carrier together with a monomer, a photopolymerization initiator, and a solvent.

Moreover, the coloring composition of the present invention exhibits excellent dispersing effects and stability over time in coloring a broad variety of printing ink, paint, ink jet ink, and also plastics, and it is thus possible to obtain a coloring material having a high level of coloring power.

In such a case, the coloring composition can be produced by the aforementioned method without using either a monomer or a photopolymerization initiator but using, in addition to the aforementioned resin and solvent, petroleum resin, casein, shellac, drying oil, synthetic drying oil, or a like resin, and ethyl cellosolve acetate, butyl cellosolve acetate, ethylbenzene, ethyl acetate, methanol, ethanol, isopropyl alcohol, butanol, ethylene glycol, glycerol, dimethylformamide, Solvesso 100 (Exxon Chemical Company), Swasol 1000, a petroleum-based solvent, or a like solvent, together with a surfactant and/or a resinous pigment dispersant as necessary.

<Color filter>

Next, the color filter will now be described. The color filter of the present invention encompasses a color filter in which filter segments for three colors, i.e., R (red), G (green), and B (blue) are formed, a color filter in which filter segments for three colors, i.e., Y (yellow), M (magenta), and C (cyan) are formed, or a like color filter formed on a transparent or reflective substrate. The filter segments for the respective colors can be formed using the coloring composition of the present invention by a printing method or a photolithographic method.

For the transparent substrate, used is a glass plate such as quartz glass, borosilicate glass, alumina silicate glass, or soda lime glass that is surface-coated with silica, or a resin plate such as polycarbonate, polymethyl methacrylate, or polyethylene terephthalate.

For the reflective substrate, used is silicon or a transparent substrate that has been mentioned above but on which a thin film of aluminium, silver, silver/copper/palladium alloy, or the like is formed.

Regarding the formation of the respective color filter segments by a printing method, patterning can be achieved merely by repeating printing and drying the coloring composition prepared as various types of printing ink, and therefore the printing method is advantageous in cost and productivity as a color filter production method. Furthermore, due to the advancement of printing technique, the printing method enables printing of fine patterns that have high dimensional

accuracy and smoothness. In order to perform printing, it is preferable that ink has a composition that does not allow the ink to dry and solidify on a printing plate or a blanket. Also, control of the fluidity of ink on a printing machine is important, and the viscosity of ink can be adjusted by a dispersant or an extender.

In the case where the respective color filter segments are formed by a photolithographic method, a coloring composition prepared as the aforementioned solvent developable or alkaline developable coloring resist material is applied to a transparent substrate by a coating method such as spray coating, spin coating, slit coating, or roll coating such that the dry film thickness is 0.2 to 5 μm. The film, which has been dried as necessity, is irradiated with ultraviolet rays through a mask having a specific pattern that is provided so as to be in contact or not in contact with the film. Thereafter, the film is immersed in a solvent or an alkaline developer, or a developer is sprayed onto the film using a sprayer or the like, to remove uncured portions and to form a desired pattern, and then the same procedure is repeated for other colors, thus making it possible to produce a color filter. Moreover, to facilitate polymerization of the coloring resist material, heating can also be performed as necessary. The photolithographic method enables production of a color filter that is more precise than the color filter of the printing method.

During development, an aqueous solution of sodium carbonate, sodium hydroxide, or the like is used as the alkaline developer, and it is also possible to use an organic alkali such as dimethylbenzylamine or triethanolamine. Also, it is possible to add an antifoaming agent and a surfactant to the developer.

To increase sensitivity to ultraviolet ray exposure, it is also possible that after the coloring resist material is applied and dried, a water soluble or alkali soluble resin, such as polyvinyl alcohol or water soluble acrylic resin, is applied and dried to form a film for preventing polymerization inhibition caused by oxygen, and thereafter ultraviolet ray exposure is performed.

The color filter of the present invention can be produced by, in addition to the aforementioned methods, an electrodeposition method, or a transfer method. The coloring composition of the present invention can be used for any of such methods. The electrodeposition method is a color filter production method in which electrodepositional formation of the respective color filter segments on a transparent conducting film is attained by electrophoresis of colloidal particles using a transparent conducting film formed on a transparent substrate. The transfer method is a method in which a color filter layer is formed in advance on the surface of a removable transfer base sheet, and this color filter layer is transferred to a desired transparent substrate.

Formation of a black matrix in advance before a filter segment is formed on a transparent substrate or a reflective substrate can further increase the contrast ratio of a liquid crystal display panel. For the black matrix, a multilayer film of chromium or chromium/chromium oxide, an inorganic film of titanium nitride, or a resin film in which a shielding agent is dispersed is used, but the black matrix is not limited thereto.

Also, it is possible that a thin-film transistor (TFT) is formed in advance on the aforementioned transparent substrate or reflective substrate, and then a filter segment is formed. Formation of a filter segment on a TFT substrate enables an increase of the aperture ratio of a liquid crystal display panel and enhancement of luminance.

An overcoat film, a columnar spacer, a transparent conductive film, a liquid crystal oriented film is formed on the color filter as necessary.

The color filter and a counter substrate are bonded together using a sealing agent, a liquid crystal is poured through an inlet provided in a sealing portion, then the inlet is closed, and, if necessary, a polarizing film or a retardation film is bonded to the outer side of the substrate, thereby producing a liquid crystal display panel.

Such a liquid crystal display panel can be used for a liquid crystal display mode in which color production is achieved using a color filter for a twisted nematic (TN), super twisted nematic (STN), in-plane switching (IPS), vertically aligned (VA), or optically compensated bend (OCB) display. Examples

The present invention shall be described in more detail below by way of examples, but the present invention is not limited thereto. Note that, the term "part" in the examples refers to part by weight.

Synthesis Example 1 <Synthesis of pigment dispersantA>

Thirty parts of C.I. Pigment Red 272 ("Cromophtal DPP Flame Red FP" manufactured by Ciba Specialty Chemicals Inc.) was added to 300 parts of 102% fuming sulfuric acid at room temperature. After stirring at room temperature for 3 hours, 1500 parts of cold methyl ethyl ketone (MEK) was added dropwise over 30 minutes. The precipitated disulfonic acid body was filtered, washed with 3000 parts of ice-cold MEK, and dried at 80°C, giving a disulfonic acid body corresponding to the compound represented by formula (7) above. Ten parts of the disulfonic acid body was fed to 100 parts of DMF, and 10 parts of thionyl chloride was slowly added dropwise. The reaction solution was heated to 60 degrees and stirred for 6 hours. The reaction solution was fed to 250 parts of ice and 250 parts of water. The precipitate was filtered, and washed with 500 parts of ice water 3 times, giving a press cake of chlorosulfonyl diketopyrrolopyrrole. This press cake was fed to 500 parts of ice, 500 parts of water, and 15 parts of dimethylaminopropylamine. Then, the mixture was warmed to 60°C and stirred for 90 minutes. The product was filtered, washed with water, and dried at 80°C, thereby giving pigment dispersant A (6.7 parts) represented by formula (9) below.

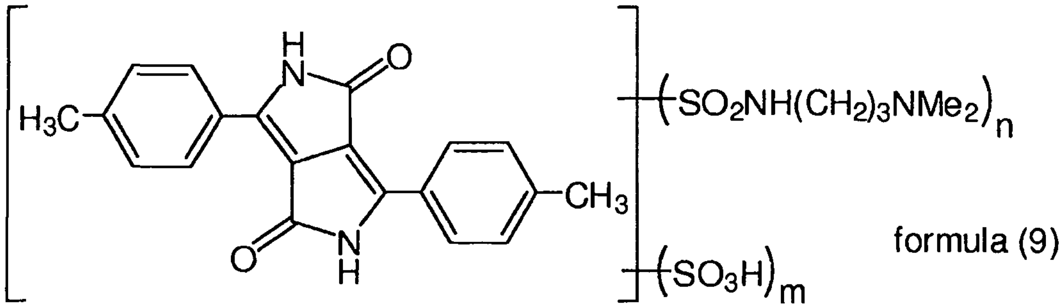

formula (9)

A molecular weight of 644.81 corresponding to (n = 2, m = 0) was identified by a mass spectrum, and the LC purity was 81.27%. Also, a molecular weight of 560.64 corresponding to (n = 1, m = 1) was identified by a mass spectrum, and the LC purity was 13.18%. The chromatogram of the pigment dispersant A is shown in Fig. 1.

Conditions of high performance liquid chromatography are presented below.

Column: Symmetry C18 5 micron (Nihon Waters K.K.)
Eluant:

(A) 0.05 mol/l aqueous $CH_3COONH_4$ solution / DMF =7/1 (volume ratio)
(B) DMF / water = 95/5 (volume ratio)

Gradient conditions:

Retain (A) : (B) =80/20 (volume ratio) for 5 minutes, then change from (A) : (B) = 80/20 (volume ratio) to (A) : (B) = 0 / 100 (volume ratio) over 20 minutes, and thereafter retain (A) : (B) = 0 / 100 (volume ratio) for 15 minutes.
Flow rate: 0.300 ml/min
Amount introduced: 5 μl
Column temperature: 35°C

Synthesis Example 2 <Synthesis of pigment dispersant B>

A press cake of chlorosulfonyl diketopyrrolopyrrole as obtained with the formulation described in Synthesis Example 1 was fed to 500 parts of ice, 500 parts of water, and 21.8 parts of diethylaminopropylamine. Then, the mixture was warmed to 60°C and stirred for 90 minutes. The product was filtered, washed with water, and dried at 80°C, thereby giving pigment dispersant B (7.3 parts) represented by formula (5) below.

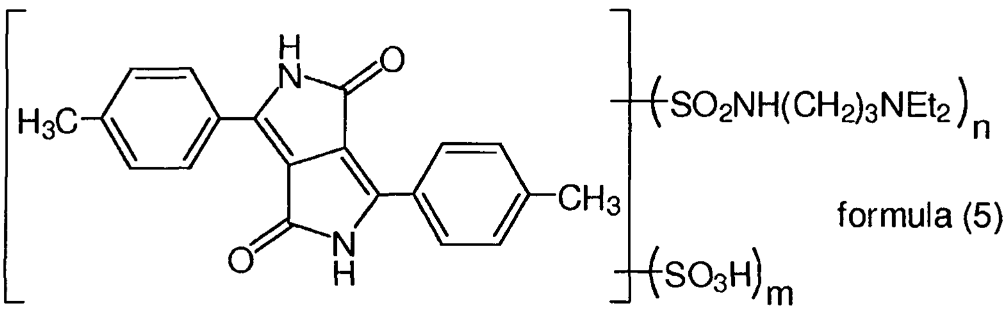

formula (5)

A molecular weight of 700.91 corresponding to (n = 2, m = 0) was identified by a mass spectrum, and the LC purity was 73.63%. Also, a molecular weight of 588.70 corresponding to (n = 1, m = 1) was identified by a mass spectrum, and the LC purity was 7.60%. The chromatogram of the pigment dispersant B is shown in Fig. 2.

Conditions of high performance liquid chromatography were the same as those described in Synthesis Example 1.

Synthesis Example 3 <Synthesis of pigment dispersant C>

A press cake of chlorosulfonyl diketopyrrolopyrrole as obtained with the formulation described in Synthesis Example 1 was fed to 500 parts of ice, 500 parts of water, and 15 parts of diethylaminopropylamine. Then, the mixture

was warmed to 60°C and stirred for 90 minutes. The product was filtered, washed with water, and dried at 80°C, thereby giving pigment dispersant C (6.5 parts) represented by formula (10) below.

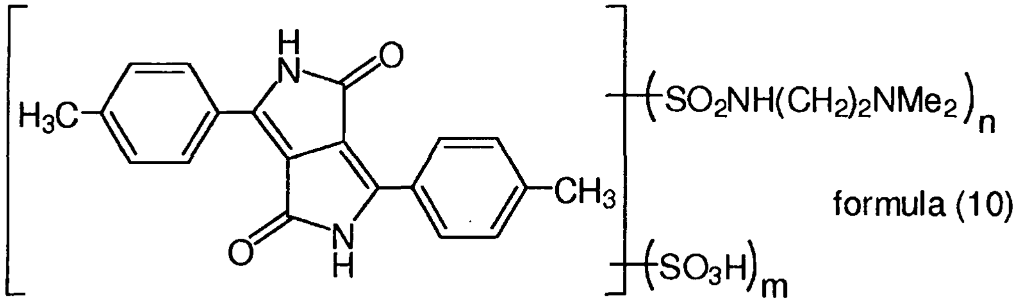

formula (10)

A molecular weight of 616.75 corresponding to (n = 2, m = 0) was identified by a mass spectrum, and the LC purity was 70.08%. Also, a molecular weight of 546.62 corresponding to (n = 1, m = 1) was identified by a mass spectrum, and the LC purity was 15.62%. The chromatogram of the pigment dispersant C is shown in Fig. 3.

Conditions of high performance liquid chromatography were the same as those described in Synthesis Example 1.

Synthesis Example 4 <Synthesis of pigment dispersant D>

A press cake of chlorosulfonyl diketopyrrolopyrrole obtained with the formulation described in Synthesis Example 1 was fed to 500 parts of ice, 500 parts of water, and 10.5 parts of the compound represented by formula (11) below. Then, the mixture was warmed to 60°C and stirred for 90 minutes. The product was filtered, washed with water, and dried at 80°C, thereby giving pigment dispersant D (6.8 parts) represented by formula (12) below.

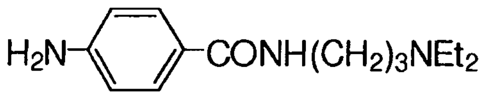

formula (11)

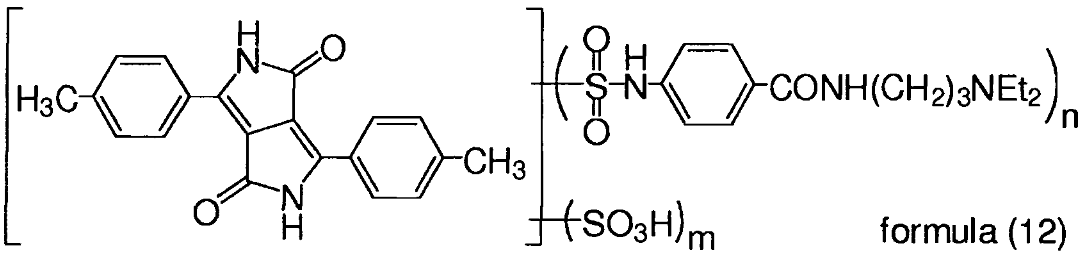

formula (12)

A molecular weight of 939.15 corresponding to (n = 2, m = 0) was identified by a mass spectrum, and the LC purity was 45.53%. Also, a molecular weight of 707.82 corresponding to (n = 1, m = 1) was identified by a mass spectrum, and the LC purity was 42.80%. The chromatogram of the pigment dispersant D is shown in Fig. 4.

Conditions of high performance liquid chromatography were the same as those described in Synthesis Example 1.

(Preparation of acrylic resin solution)

Cyclohexanone (700 parts) was added to a separable four-necked flask equipped with a thermometer, a cooling tube, a nitrogen gas inlet tube, and a stirrer, and heated to 80°C. After nitrogen substitution inside the reaction vessel, a mixture of 133 parts of N-butyl methacrylate, 46 parts of 2-hydroxyethyl methacrylate, 43 parts of methacrylic acid, 74 parts of p-cumylphenol ethylene oxide-modified acrylate ("Aronix M110" manufactured by Toagosei Co., Ltd.), and 4 parts of 2,2'-azobisisobutyronitrile was added dropwise over 2 hours from a dripping tube. After the completion of dripping, the reaction was further continued for 3 hours, giving a solution of an acrylic resin having a weight average molecular weight of 26000. After cooling to room temperature, 2 parts of the resin solution was removed, and drying was carried out by heating at 180°C for 20 minutes to measure the nonvolatile content. Cyclohexanone was added such that the

nonvolatile content of the resin solution was 20 wt%, giving an acrylic resin solution.

(Preparation of red treatment pigment 1)

A mixture of 300 parts of a diketopyrrolopyrrole-based red pigment (C.I. PIGMENT RED 254, "IRGAPHOR RED B-CF" manufactured by Ciba Specialty Chemicals Inc.), 1500 parts of sodium chloride, and 150 parts of diethylene glycol was kneaded at 60°C for 6 hours using a 1-gallon stainless steel kneader (Inoue MFG., Inc.). Next, this kneaded material was fed to 5 liters of warm water, and stirred for 1 hour while heating to 70°C to process it into a slurry form. Filtration and water washing were repeated to remove sodium chloride and diethylene glycol, and then drying and pulverization were performed, giving 290 parts of red treatment pigment 1.

(Preparation of red treatment pigment 2)

A mixture of 300 parts of a thiazineindigo-based red pigment (C.I. PIGMENT RED 279, "NOVOPERM THI RED 4G70" manufactured by Clariant K.K.), 1500 parts of sodium chloride, and 150 parts of diethylene glycol was kneaded at 60°C for 8 hours using a 1-gallon stainless steel kneader (Inoue MFG., Inc.). Next, this kneaded material was fed to 5 liters of warm water, and stirred for 1 hour while heating to 70°C to process it into a slurry form. Filtration and water washing were repeated to remove sodium chloride and diethylene glycol, and then drying and pulverization were performed, giving 290 parts of red treatment pigment 2.

(Preparation of red/yellow mixed treatment pigment 1)

A mixture of 300 parts of a mixture in which a diketopyrrolopyrrole-based red pigment (C.I. PIGMENT RED 254, "IRGAPHOR RED B-CF" manufactured by Ciba Specialty Chemicals Inc.), an anthraquinone-based red pigment (C.I. PIGMENT RED 177, "CHROMOPHTAL RED A2B" manufactured by Ciba Specialty Chemicals Inc.), and an azo-based yellow pigment (C.I. PIGMENT YELLOW 150, "YELLOW PIGMENT E4GN-GT" manufactured by Lanxess K.K.) were mixed in a weight ratio of 3:5:2, 1500 parts of sodium chloride, and 150 parts of diethylene glycol was kneaded at 60°C for 10 hours using a 1-gallon stainless steel kneader (Inoue MFG., Inc.). Next, this kneaded material was fed to 5 liters of warm water, and stirred for 1 hour while heating to 70°C to process it into a slurry form. Filtration and water washing were repeated to remove sodium chloride and diethylene glycol, and then drying and pulverization were performed, giving 290 parts of red/yellow mixed treatment pigment 1.

(Preparation of red/yellow mixed treatment pigment 2)

A mixture of 300 parts of a mixture in which a diketopyrrolopyrrole-based red pigment (C.I. PIGMENT RED 254, "IRGAPHOR RED B-CF" manufactured by Ciba Specialty Chemicals Inc.) and an azo-based yellow pigment (C.I. PIGMENT YELLOW 150, "YELLOW PIGMENT E4GN-GT" manufactured by Lanxess K.K.) were mixed in a weight ratio of 3:1, 1500 parts of sodium chloride, and 150 parts of diethylene glycol was kneaded at 60°C for 10 hours using a 1-gallon stainless steel kneader (Inoue MFG., Inc.). Next, this kneaded material was fed to 5 liters of warm water, and stirred for 1 hour while heating to 70°C to process it into a slurry form. Filtration and water washing were repeated to remove sodium chloride and diethylene glycol, and then drying and pulverization were performed, giving 290 parts of red/yellow treatment pigment 2.

(Synthesis of pigment dispersant E described in patent document 1)

The compound represented by formula (13) was subjected to chlorosulfonation by a conventional method, and 50 parts of the resulting compound was dispersed in 900 parts of water. Next, 240 parts of N,N-diethylaminoethylamine was added, the temperature was increased to 60°C, and stirring was carried out at this temperature for 2 hours. The precipitate was filtered, washed with water, and dried at 80°C, giving 60 parts of pigment dispersant E.

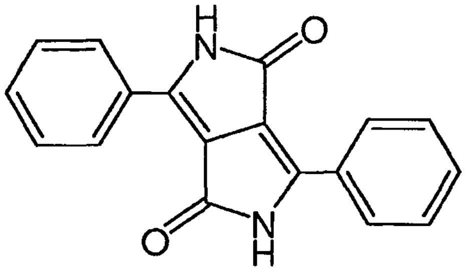

formula (13)

<Example 1>

A mixture of 270 parts of a diketopyrrolopyrrole-based red pigment (C.I. PIGMENT RED 254, "IRGAPHOR RED B-CF" manufactured by Ciba Specialty Chemicals Inc.), 30 parts of the pigment dispersant A obtained in Synthesis Example 1, 1500 parts of sodium chloride, and 150 parts of diethylene glycol was kneaded at 60°C for 6 hours using a 1-gallon stainless steel kneader (Inoue MFG., Inc.). Next, this kneaded material was fed to 5 liters of warm water, and stirred for 1 hour while heating to 70°C to process it into a slurry form. Filtration and water washing were repeated to remove sodium chloride and diethylene glycol, and then drying was performed for one whole day at 80°C, giving 290 parts of red treatment pigment F.

<Example 2>

290 parts of red treatment pigment G was obtained in the same manner as in Example 1 except that pigment dispersant B was used in place of pigment dispersant A in Example 1.

<Example 3>

290 parts of red treatment pigment H was obtained in the same manner as in Example 1 except that pigment dispersant C was used in place of pigment dispersant A in Example 1.

<Example 4>

290 parts of red treatment pigment I was obtained in the same manner as in Example 1 except that pigment dispersant D was used in place of pigment dispersant A in Example 1.

<Comparative Example 1>

290 parts of red treatment pigment J was obtained in the same manner as in Example 1 except that pigment dispersant E was used in place of pigment dispersant A in Example 1.

(Evaluation of pigment particle size)

The particle size of pigments was observed using an H-7650 transmission electron microscope manufactured by Hitachi High-Technologies Corporation.

As shown in Table 1, the pigment dispersants of the present invention exhibited a greater crystal growth preventive effect than a conventional pigment dispersant (E).

[Table 1]

| | Pigment | Particle Size Evaluation | |
|---|---|---|---|
| | | Shape | Size |
| --- | IRGAPHOR RED B-CF | Round | 60-80nm |
| Example 1 | F | Round | 32-50nm |
| Example 2 | G | Round | 27-45nm |
| Example 3 | H | Round | 27-45nm |

(continued)

| | Pigment | Particle Size Evaluation | |
|---|---|---|---|
| | | Shape | Size |
| Example 4 | I | Rice grain shaped | 25-40nm |
| Comparative Example 1 | I | Round | 40-55nm |

<Examples 5-46 and Comparative Examples 2-10>

Various pigments, pigment dispersants A to E, an acrylic resin solution, and a solvent (cyclohexanone) were blended as shown in Tables 2 to 5, uniformly stirred and mixed, and dispersed for 3 hours with an Eiger Mill ("Minimodel M-250 MKII" manufactured by Eiger Japan) using zirconia beads having a diameter of 1 mm. This was subjected to filtration with a 5 μm filter to prepare a coloring composition.

(Evaluation of coloring compositions)

<Viscosity>

The viscosities at 25°C of the color filter coloring compositions obtained in Examples 5 to 46 and Comparative Examples 2 to 10 were measured with a cone/plate viscometer ("TVE-20L" manufactured by Toki Sangyo Co., Ltd.).

<Preparation of coated substrate>

The color filter coloring compositions obtained in Examples 5 to 46 and Comparative Examples 2 to 10 were applied to 100 mm x 100 mm glass substrates having a thickness of 1.1 mm using a spin coater at revolutions of 300 rpm, 500 rpm, 1000 rpm, and 1500 rpm, and dried at 60°C for 20 minutes, giving 4 kinds of coated substrates having different thicknesses.

<Lightness (Y), chromaticity (x, y)>

The lightness (Y) and the chromaticity (x, y) with illuminant C of the coated substrates prepared above were measured with a microspectrophotometer ("OSP-SP100" manufactured by Olympus Corporation).

<Contrast>

The luminance of the coated substrates prepared above was measured using a luminance colorimeter BM-5A manufactured by Topcon Corporation as a luminance meter and a polarization film LLC2-92-18 manufactured by Sanritz Corporation as a polarizing plate. A coated substrate was sandwiched between two polarization plates, and the luminance when the polarization plates were in paralleled and the luminance when the polarization plates were orthogonal were measured. The ratio of the luminance when in parallel to the luminance when orthogonal was regarded as the contrast.

$$\text{Contrast} = (\text{Luminance when polarization plates are in parallel}) / (\text{Luminance when polarization plates are orthogonal})$$

Note that, during measurement, to block unnecessary light, a black mask with a hole having a length of 1 cm per side was applied to the measurement portion and measurement was carried out.

From the contrast and the chromaticity measured for 4 coated substrates prepared at different revolutions, the contrast was plotted against x. Each plot was connected with a straight line, and the contrast at x = 0.60 was approximated.

As shown in Tables 2 to 5, the pigment dispersants of the present invention demonstrated favorable dispersibility and gave better results in terms of lightness (Y) than the conventional pigment dispersant E. Moreover, the contrast of coated substrates was also favorable.

Note that NOVOPERM THI RED 4G70 (Clariant K.K.) was used for C.I.PIGMENT RED 279.

[Table 2A]

| | Amount contained | | | | | | Evaluation | | |
|---|---|---|---|---|---|---|---|---|---|
| | Pigment | | Pigment dispersant | | Acrylic resin solution (g) | Solvent (g) | ΔY | Contrast ratio | Viscosity (mPa s) |
| | Type | Amount (g) | Type | Amount (g) | | | | | |
| Example 5 | Red treatment pigment 1 (C.I.Pigment RED 254) | 15 | A | 1.2 | 50 | 60 | +0.8 | 1.24 | 10.2 |
| Example 6 | | 14.2 | A | 2.0 | 50 | 60 | +1.1 | 1.25 | 9.4 |
| Example 7 | | 15 | B | 1.2 | 50 | 60 | +0.7 | 1.22 | 13.2 |
| Example 8 | | 15 | C | 1.2 | 50 | 60 | +0.9 | 1.21 | 8.5 |
| Example 9 | | 15 | D | 1.2 | 50 | 60 | +1.0 | 1.25 | 16.5 |
| Comparative Example 2 | | 15 | E | 1.2 | 50 | 60 | -0.8 | 1.23 | 12.8 |
| Comparative Example 3 | | 16.2 | None | --- | 50 | 60 | 0 | 1.00 | 255 |
| Example 10 | F | 15 | A | 1.2 | 50 | 60 | +1.2 | 1.42 | 20.9 |
| Example 11 | | 15 | B | 1.2 | 50 | 60 | +1.3 | 1.39 | 22.9 |
| Example 12 | | 15 | C | 1.2 | 50 | 60 | +1.1 | 1.44 | 22.1 |
| Example 13 | | 15 | D | 1.2 | 50 | 60 | +1.4 | 1.45 | 23.3 |
| Example 14* | | 15 | E | 1.2 | 50 | 60 | +0.1 | 1.38 | 24.2 |
| Example 15 | G | 15 | A | 1.2 | 50 | 60 | +1.3 | 1.49 | 23.2 |
| Example 16 | | 15 | B | 1.2 | 50 | 60 | +1.2 | 1.51 | 28.2 |
| Example 17 | | 15 | C | 1.2 | 50 | 60 | +1.2 | 1.52 | 26 |
| Example 18 | | 15 | D | 1.2 | 50 | 60 | +1.5 | 1.55 | 24.2 |
| Example 19* | | 15 | E | 1.2 | 50 | 60 | +0.2 | 1.47 | 27.3 |

* Example presented as reference since pigment dispersant E was also used.

[Table 2B]

| | Amount contained | | | | | | Evaluation | | |
|---|---|---|---|---|---|---|---|---|---|
| | Pigment | | Pigment dispersant | | Acrylic resin solution (g) | Solvent (g) | ΔY | Contrast ratio | Viscosity (mPa s) |
| | Type | Amount (g) | Type | Amount (g) | | | | | |
| Example 20 | H | 15 | A | 1.2 | 50 | 60 | +1.3 | 1.53 | 28.3 |
| Example 21 | | 15 | B | 1.2 | 50 | 60 | +1.3 | 1.50 | 26.7 |
| Example 22 | | 15 | C | 1.2 | 50 | 60 | +1.2 | 1.51 | 24.9 |
| Example 23 | | 15 | D | 1.2 | 50 | 60 | +1.5 | 1.57 | 26.2 |
| Example 24* | | 15 | E | 1.2 | 50 | 60 | +0.2 | 1.50 | 28.3 |
| Example 25 | I | 15 | A | 1.2 | 50 | 60 | +1.5 | 1.72 | 32.1 |
| Example 26 | | 15 | B | 1.2 | 50 | 60 | +1.4 | 1.69 | 35.4 |
| Example 27 | | 15 | C | 1.2 | 50 | 60 | +1.4 | 1.73 | 31.9 |
| Example 28 | | 15 | D | 1.2 | 50 | 60 | +1.7 | 1.78 | 38.1 |
| Example 29* | | 15 | E | 1.2 | 50 | 60 | +0.3 | 1.69 | 36.3 |
| Example 30* | J | 15 | A | 1.2 | 50 | 60 | -0.1 | 1.34 | 21.8 |
| Example 31* | | 15 | B | 1.2 | 50 | 60 | -0.2 | 1.35 | 24.4 |
| Example 32* | | 15 | C | 1.2 | 50 | 60 | -0.1 | 1.35 | 17.3 |
| Example 33* | | 15 | D | 1.2 | 50 | 60 | 0 | 1.37 | 24.1 |
| Comparative Example 4 | | 15 | E | 1.2 | 50 | 60 | -1.5 | 1.34 | 22.1 |
| * Example presented as reference since pigment dispersant E was also used. | | | | | | | | | |

[Table 3]

| | Amount contained | | | | | | Evaluation | | |
|---|---|---|---|---|---|---|---|---|---|
| | Pigment | | Pigment dispersant | | Acrylic resin solution (g) | Solvent (g) | ΔY | Contrast ratio | Viscosity (mPa s) |
| | Type | Amount (g) | Type | Amount (g) | | | | | |
| Example 34 | Red treatment pigment 2 (C.I.Pigment RED 279) | 15 | A | 1.2 | 50 | 60 | +0.8 | 1.24 | 10.2 |
| Example 35 | | 15 | B | 1.2 | 50 | 60 | +1.1 | 1.25 | 9.4 |
| Example 36 | | 15 | C | 1.2 | 50 | 60 | +0.7 | 1.22 | 13.2 |
| Example 37 | | 15 | D | 1.2 | 50 | 60 | +0.9 | 1.21 | 8.5 |
| Example 38 | | 14.2 | D | 2.0 | 50 | 60 | +1.0 | 1.25 | 16.5 |
| Comparative Example 5 | | 15 | E | 1.2 | 50 | 60 | -0.8 | 1.23 | 12.8 |
| Comparative Example 6 | | 16.2 | None | --- | 50 | 60 | 0 | 1.00 | 359 |

[Table 4]

| | Amount contained | | | | | | Evaluation | | |
|---|---|---|---|---|---|---|---|---|---|
| | Pigment | | Pigment dispersant | | Acrylic resin solution (g) | Solvent (g) | ΔY | Contrast ratio | Viscosity (mPa s) |
| | Type | Amount (g) | Type | Amount (g) | | | | | |
| Example 39 | Red/Yellow mixed treatment pigment 1 | 15 | A | 1.2 | 50 | 60 | +0.4 | 1.39 | 118.7 |
| Example 40 | | 15 | B | 1.2 | 50 | 60 | +0.3 | 1.38 | 146.2 |
| Example 41 | | 15 | C | 1.2 | 50 | 60 | +0.2 | 1.34 | 132.3 |
| Example 42 | | 15 | D | 1.2 | 50 | 60 | +0.4 | 1.40 | 111.2 |
| Comparative Example 7 | | 15 | E | 1.2 | 50 | 60 | -0.5 | 1.33 | 122.4 |
| Comparative Example 8 | | 16.2 | None | 0 | 50 | 60 | 0 | 1.00 | 677 |

[Table 5]

| | Amount contained | | | | | | Evaluation | | |
|---|---|---|---|---|---|---|---|---|---|
| | Pigment | | Pigment dispersant | | Acrylic resin solution (g) | Solvent (g) | ΔY | Contrast ratio | Viscosity (mPa s) |
| | Type | Amount (g) | Type | Amount (g) | | | | | |
| Example 43 | Red/Yellow mixed treatment pigment 2 | 15 | A | 1.2 | 50 | 60 | +0.5 | 1.55 | 68.9 |
| Example 44 | | 15 | B | 1.2 | 50 | 60 | +0.4 | 1.52 | 58.5 |
| Example 45 | | 15 | C | 1.2 | 50 | 60 | +0.3 | 1.57 | 77.1 |
| Example 46 | | 15 | D | 1.2 | 50 | 60 | +0.5 | 1.63 | 79.5 |
| Comparative Example 9 | | 15 | E | 1.2 | 50 | 60 | -0.4 | 1.50 | 72.5 |
| Comparative Example 10 | | 16.2 | None | 0 | 50 | 60 | 0 | 1.00 | 445 |

## Claims

1. A diketopyrrolopyrrole pigment dispersant represented by formula (1) below:

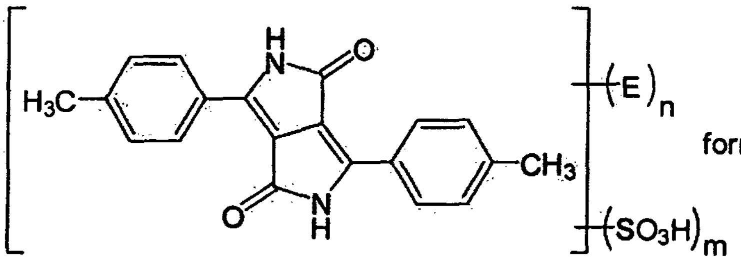

formula (1)

in formula (1), E represents a basic group represented by formula (2) below;
and n and m is 1:

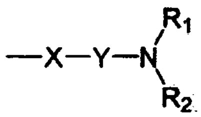

formula (2)

in formula (2), X represents a direct bond, -S-, -O-, $-SO_2-$, -CO-, - $SO_2NR-$, - NR $SO_2-$, -CONR-, $-CH_2NRCOCH_2NR-$, or $-(CH_2)_kNH-$, provided that k represents an integer of 1 to 10; R represents a hydrogen atom, an optionally substituted alkyl group having 20 or fewer carbon atoms, an optionally substituted alkenyl group having 20 or fewer carbon atoms, or an optionally substituted aryl group having 20 or fewer carbon atoms; Y represents a direct bond, an optionally substituted alkylene group having 20 or fewer carbon atoms, an optionally substituted alkenylene group having 20 or fewer carbon atoms, an optionally substituted arylene group having 20 having 20 or fewer carbon atoms, an optionally substituted arylene group having 20 or fewer carbon atoms, an optionally substituted heterocycle comprising a nitrogen, oxygen, or sulfur atom, or $-Y_1-Y_2-Y_3-$; $Y_1$ and $Y_3$ each independently represent an optionally substituted alkylene group having 20 or fewer carbon atoms, an optionally substituted alkenylene group having 20 or fewer carbon atoms, an optionally substituted arylene group having 20 or fewer carbon atoms, or an optionally substituted heterocycle comprising a nitrogen, oxygen, or sulfur atom; $Y_2$ represents a direct bond, -NR-, -O-, - $SO_2-$, or -CO-, and R is as defined above, provided that $Y_2$ is not a direct bond when $Y_1$ and $Y_3$ are the same group; $R_1$ and $R_2$ each independently represent an optionally substituted saturated or unsaturated alkyl group having 30 or fewer carbon atoms.

2. The diketopyrrolopyrrole pigment dispersant according to claim 1 represented by formula (4) below:

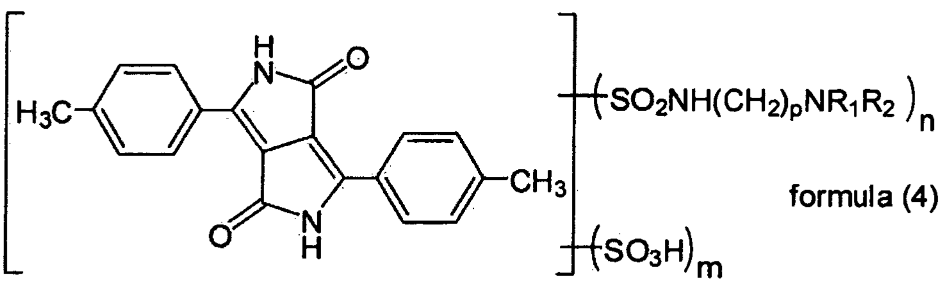

formula (4)

in formula (4), p represents an integer of 2 to 5; and $R_1$ and $R_2$ each independently represent an optionally substituted saturated or unsaturated alkyl group having 10 or fewer carbon atoms.

3. A pigment dispersant composition comprising the diketopyrrolopyrrole pigment dispersant according to claim 1 or 2, and further comprising a compound represented by formula (1) below:

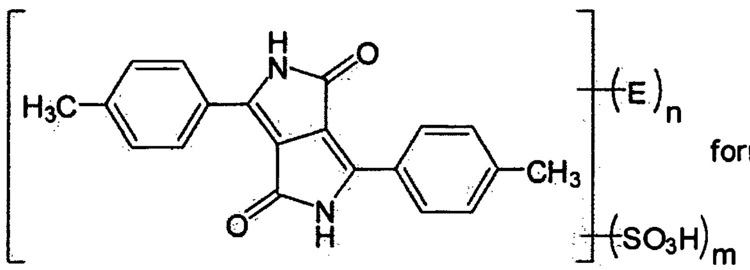

formula (1)

in said formula (1), E represents a basic group represented by formula (2) or (3) below; and n is 2 and m is 0:

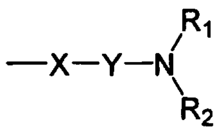

formula (2)

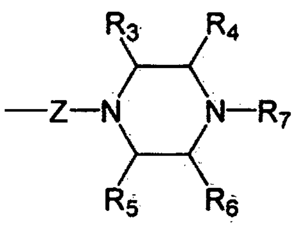

formula (3)

in formula (2), X represents a direct bond, -S-, -O-, $-SO_2-$, -CO-, - $SO_2NR-$, -NR $SO_2-$, -CONR-, $-CH_2NRCOCH_2NR-$, or $-(CH_2)_kNH-$, provided that k represents an integer of 1 to 10; R represents a hydrogen atom, an optionally substituted alkyl group having 20 or fewer carbon atoms, an optionally substituted alkenyl group having 20 or fewer carbon atoms, or an optionally substituted aryl group having 20 or fewer carbon atoms; Y represents a direct bond, an optionally substituted alkylene group having 20 or fewer carbon atoms, an optionally substituted alkenylene group having 20 or fewer carbon atoms, an optionally substituted arylene group having 20 or fewer carbon atoms, an optionally substituted heterocycle comprising a nitrogen, oxygen, or sulfur atom, or $-Y_1-Y_2-Y_3-$; $Y_1$ and $Y_3$ each independently represent an optionally substituted alkylene group having 20 or fewer carbon atoms, an optionally substituted alkenylene group having 20 or fewer carbon atoms, an optionally substituted arylene group having 20 or fewer carbon atoms, or an optionally substituted heterocycle comprising a nitrogen, oxygen, or sulfur atom; $Y_2$ represents a direct bond, -NR-, -O-, - $SO_2-$, or -CO-, and R is as defined above, provided that $Y_2$ is not a direct bond when $Y_1$ and $Y_3$ are the same group; $R_1$ and $R_2$ each independently represent an optionally substituted saturated or unsaturated alkyl group having 30 or fewer carbon atoms, or $R_1$ and $R_2$ together form an optionally substituted heterocycle comprising a nitrogen, oxygen, or sulfur atom;

in formula (3), Z is a direct bond, $-CH_2NR'COCH_2NR'-$, - $CH_2NR'COCH_2NR'-G-$, -NR'-, -NR'-G-CO-, -NR'-G-CONR'-, -NR'-G- $SO_2-$, -NR'-G- $SO_2NR'-$, -O-G-CO-, -O-G-CONR'-, - $SO_2-$, $-O-G-SO_2-$, or $-O-G-SO_2NR'-$, where G represents an optionally substituted alkylene group having 20 or fewer carbon atoms, an optionally substituted alkenylene group having 20 or fewer carbon atoms, or an optionally substituted arylene group having 20 or fewer carbon atoms, and R' represents a hydrogen atom, an optionally substituted alkyl group having 20 or fewer carbon atoms, an optionally substituted alkenyl group having 20 or fewer carbon atoms, or an optionally substituted aryl group having 20 or fewer carbon atoms; $R_3$, $R_4$, $R_5$, and $R_6$ each independently represent a hydrogen atom, an optionally substituted alkyl group having 20 or fewer carbon atoms, an optionally substituted alkenyl group having 20 or fewer carbon atoms, or an optionally substituted aryl group having 20 or fewer carbon atoms; and $R_7$ represents a hydrogen atom, an optionally substituted alkyl group having 20 or fewer carbon atoms or an optionally substituted alkenyl group having 20 or fewer carbon atoms.

**4.** The pigment dispersant composition according to claim 3, wherein the compound represented by formula (1) where n is 2 and m is 0 is represented by formula (4) below:

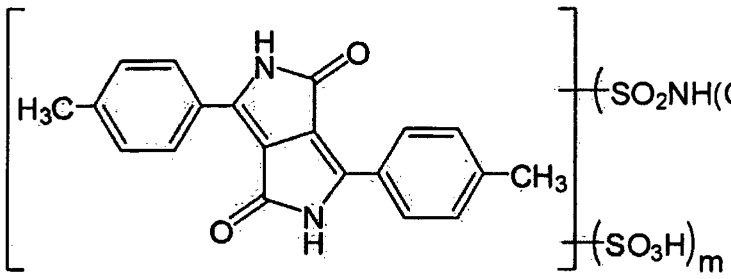

formula (4)

in said formula (4), p represents an integer of 2 to 5; and $R_1$ and $R_2$ each independently represent an optionally substituted saturated or unsaturated alkyl group having 10 or fewer carbon atoms, or $R_1$ and $R_2$ together form an optionally substituted heterocycle comprising a nitrogen, oxygen, or sulfur atom.

5. A method for producing a diketopyrrolopyrrole pigment dispersant of claim 1 or 2, or for producing a composition of claim 3 and 4, comprising sulfonating a diketopyrrolopyrrole pigment represented by formula (6) below, then reacting the pigment with a chlorinating agent for chlorosulfonylation, and further reacting the pigment with an amine component.

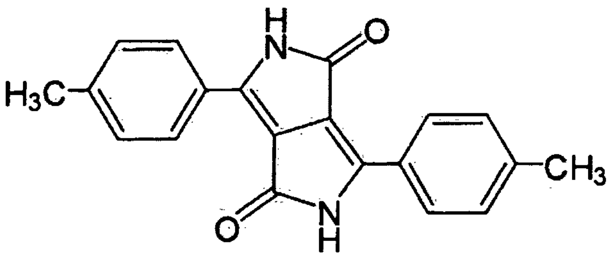

formula (6)

6. A pigment composition comprising a pigment and the diketopyrrolopyrrole pigment dispersant of claim 1 or 2 or the pigment dispersant composition of claim 3 or 4.

7. The pigment composition according to claim 6, further comprising a pigment derivative.

8. The pigment composition according to claim 7, wherein the pigment derivative comprises at least one pigment derivative selected from pigment derivatives in which a basic group, an acidic group, or a phthalimidomethyl group is introduced in a pigment residue composed of diketopyrrolopyrrole, quinacridone, thiazine-indigo, benzoisoindole, or anthraquinone.

9. The pigment composition according to claim 6, wherein the pigment comprises a diketopyrrolopyrrole-based red pigment, a quinacridone-based red pigment, a thiazineindigo-based red pigment, or an anthraquinone-based red pigment.

10. The pigment composition according to any of claims 6 to 9, wherein the pigment further comprises a yellow pigment.

11. A coloring composition comprising a pigment composition according to any one of claims 6 to 10 and a pigment carrier.

12. A color filter having a filter segment formed from the coloring composition according to claim 11.

**Patentansprüche**

1. Ein Diketopyrrolopyrrolpigment-Dispersant repräsentiert durch folgende Formel (1):

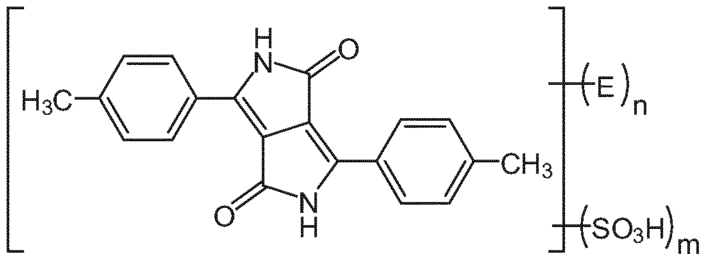

Formel (1)

wobei in Formel (1) E eine basische Gruppe repräsentiert durch die folgende Formel (2) repräsentiert, und n und m 1 ist:

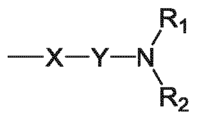

Formel (2)

wobei in Formel (2) X repräsentiert: eine direkte Bindung, -S-, -O-, $-SO_2-$, - CO-, - $SO_2NR-$, $-NRSO_2-$, -CONR-, $-CH_2NRCOCH_2NR-$, oder $-(CH_2)_kNH-$, vorausgesetzt dass k eine ganze Zahl von 1 bis 10 repräsentiert; R repräsentiert: ein Wasserstoffatom, eine optional substituierte Alkylgruppe mit 20 oder weniger Kohlenstoffatomen, eine optional substituierte Alkenylgruppe mit 20 oder weniger Kohlenstoffatomen, oder eine optional substituierte Arylgruppe mit 20 oder weniger Kohlenstoffatomen; Y repräsentiert: eine direkte Bindung, eine optional substituierte Alkylengruppe mit 20 oder weniger Kohlenstoffatomen, eine optional substituierte Alkenylengruppe mit 20 oder weniger Kohlenstoffatomen, eine optional substituierte Arylengruppe mit 20 oder weniger Kohlenstoffatomen, einen optional substituierten Heterocyclus enthaltend ein Stickstoff-, Sauerstoff-, oder Schwefelatom, oder $-Y_1-Y_2-Y_3-$; $Y_1$ und $Y_3$ jeweils unabhängig voneinander repräsentieren: eine optional substituierte Alkylengruppe mit 20 oder weniger Kohlenstoffatomen, eine optional substituierte Alkenylengruppe mit 20 oder weniger Kohlenstoffatomen, eine optional substituierte Arylengruppe mit 20 oder weniger Kohlenstoffatomen, oder einen optional substituierten Heterocyclus enthaltend ein Stickstoff-, Sauerstoff-, oder Schwefelatom; $Y_2$ repräsentiert: eine direkte Bindung, -NR-, -O-, - $SO_2-$, oder -CO-, mit R wie oben definiert, vorausgesetzt dass $Y_2$ keine direkte Bindung ist, wenn $Y_1$ und $Y_3$ dieselbe Gruppe sind; $R_1$ und $R_2$ jeweils unabhängig voneinander repräsentieren: eine optional substituierte gesättigte oder ungesättigte Alkylgruppe mit 30 oder weniger Kohlenstoffatomen.

**2.** Das Diketopyrrolopyrrolpigment-Dispersant gemäß Anspruch 1, repräsentiert durch die folgende Formel (4):

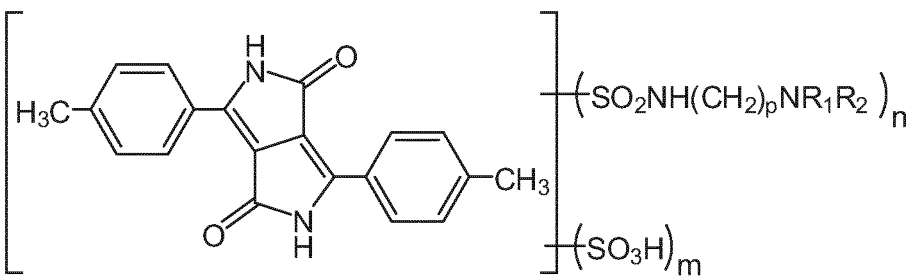

Formel (4)

wobei in Formel (4) p eine ganze Zahl von 2 bis 5 repräsentiert; und $R_1$ und $R_2$ jeweils unabhängig voneinander eine optional substituierte gesättigte oder ungesättigte Alkylgruppe mit 10 oder weniger Kohlenstoffatomen repräsentieren.

**3.** Eine Pigmentdispersant-Zusammensetzung enthaltend das Diketopyrrolopyrrolpigment-Dispersant gemäß Anspruch 1 oder 2, und weiters enthaltend eine Verbindung repräsentiert durch die folgende Formel (1):

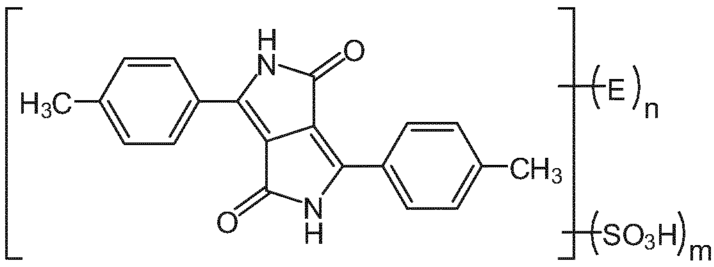

wobei in dieser Formel (1) E eine basische Gruppe repräsentiert durch die folgende Formel (2) oder (3) repräsentiert; und n 2 ist und m 0 ist:

Formel (2)

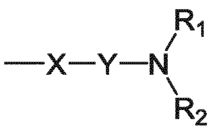

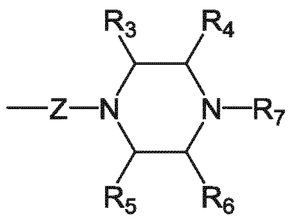

Formel (3)

wobei in Formel (2) X repräsentiert: eine direkte Bindung, -S-, -O-, $-SO_2-$, -CO-, - $SO_2NR-$, $-NRSO_2-$, -CONR-, $-CH_2NRCOCH_2NR-$, oder $-(CH_2)_kNH-$, vorausgesetzt dass k eine ganze Zahl von 1 bis 10 repräsentiert; R repräsentiert: ein Wasserstoffatom, eine optional substituierte Alkylgruppe mit 20 oder weniger Kohlenstoffatomen, eine optional substituierte Alkenylgruppe mit 20 oder weniger Kohlenstoffatomen, oder eine optional substituierte Arylgruppe mit 20 oder weniger Kohlenstoffatomen; Y repräsentiert: eine direkte Bindung, eine optional substituierte Alkylengruppe mit 20 oder weniger Kohlenstoffatomen, eine optional substituierte Alkenylengruppe mit 20 oder weniger Kohlenstoffatomen, eine optional substituierte Arylengruppe mit 20 oder weniger Kohlenstoffatomen, einen optional substituierten Heterocyclus enthaltend ein Stickstoff-, Sauerstoff-, oder Schwefelatom, oder $-Y_1-Y_2-Y_3-$; $Y_1$ und $Y_3$ jeweils unabhängig voneinander repräsentieren: eine optional substituierte Alkylengruppe mit 20 oder weniger Kohlenstoffatomen, eine optional substituierte Alkenylengruppe mit 20 oder weniger Kohlenstoffatomen, eine optional substituierte Arylengruppe mit 20 oder weniger Kohlenstoffatomen, oder einen optional substituierten Heterocyclus enthaltend ein Stickstoff-, Sauerstoff-, oder Schwefelatom; $Y_2$ repräsentiert: eine direkte Bindung, -NR-, -O-, - $SO_2-$, oder -CO-, mit R wie oben definiert, vorausgesetzt dass $Y_2$ keine direkte Bindung ist, wenn $Y_1$ und $Y_3$ dieselbe Gruppe sind; $R_1$ und $R_2$ jeweils unabhängig voneinander repräsentieren: eine optional substituierte gesättigte oder ungesättigte Alkylgruppe mit 30 oder weniger Kohlenstoffatomen, oder $R_1$ und $R_2$ miteinander einen optional substituierten Heterocyclus enthaltend ein Stickstoff-, Sauerstoff-, oder Schwefelatom bilden;
wobei in Formel (3) Z ist: eine direkte Bindung, $-CH_2NR'COCH_2NR'-$,$-CH_2NR'COCH_2NR'-G-$, -NR'-, -NR'-G-CO-, -NR'-G-CONR'-, -NR'-G- $SO_2-$, -NR'-G- $SO_2NR'-$, -O-G-CO-, -O-G-CONR'-, - $OSO_2-$, $-O-G-SO_2-$, oder -O-G-$SO_2NR'-$, wobei G repräsentiert: eine optional substituierte Alkylengruppe mit 20 oder weniger Kohlenstoffatomen, eine optional substituierte Alkenylengruppe mit 20 oder weniger Kohlenstoffatomen, oder eine optional substituierte Arylengruppe mit 20 oder weniger Kohlenstoffatomen, und R' repräsentiert: ein Wasserstoffatom, eine optional substituierte Alkylgruppe mit 20 oder weniger Kohlenstoffatomen, eine optional substituierte Alkenylgruppe mit 20 oder weniger Kohlenstoffatomen, oder eine optional substituierte Arylgruppe mit 20 oder weniger Kohlenstoffatomen;

$R_3$, $R_4$, $R_5$, und $R_6$ jeweils unabhängig voneinander repräsentieren: ein Wasserstoffatom, eine optional substituierte Alkylgruppe mit 20 oder weniger Kohlenstoffatomen, eine optional substituierte Alkenylgruppe mit 20 oder weniger Kohlenstoffatomen, oder eine optional substituierte Arylgruppe mit 20 oder weniger Kohlenstoffatomen; und $R_7$ repräsentiert: ein Wasserstoffatom, eine optional substituierte Alkylgruppe mit 20 oder weniger Kohlenstoffatomen, oder eine optional substituierte Alkenylgruppe mit 20 oder weniger Kohlenstoffatomen.

**4.** Die Pigmentdispersant-Zusammensetzung gemäß Anspruch 3, wobei die Verbindung repräsentiert durch die Formel (1), in der n 2 ist und m 0 ist, repräsentiert wird durch die folgende Formel (4):

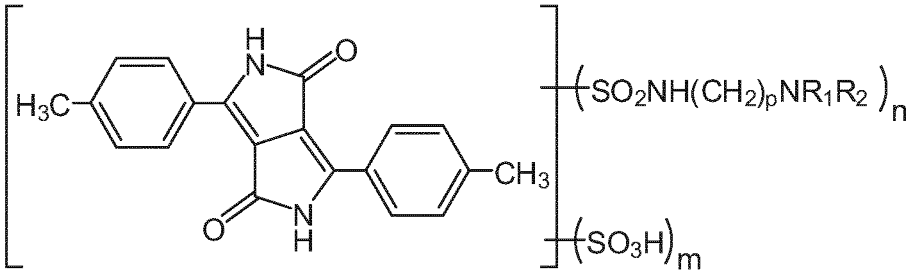

Formel (4)

wobei in dieser Formel (4) p eine ganze Zahl von 2 bis 5 repräsentiert; und $R_1$ und $R_2$ jeweils unabhängig voneinander repräsentieren: eine optional substituierte gesättigte oder ungesättigte Alkylgruppe mit 10 oder weniger Kohlenstoffatomen, oder $R_1$ und $R_2$ miteinander einen optional substituierten Heterocyclus enthaltend ein Stickstoff-, Sauerstoff-, oder Schwefelatom bilden.

**5.** Ein Verfahren zur Herstellung eines Diketopyrrolopyrrolpigment-Dispersants gemäß Anspruch 1 oder 2, oder zur Herstellung einer Zusammensetzung gemäß Anspruch 3 und 4, umfassend die Sulfonierung eines Diketopyrrolopyrrolpigments repräsentiert durch die folgende Formel (6), dann Reaktion des Pigments mit einem Chlorierungsreagenz zur Chlorosulfonylierung, und Weiterreaktion des Pigments mit einer Aminkomponente.

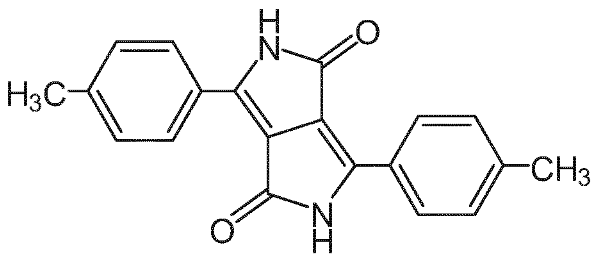

Formel (6)

**6.** Eine Pigmentzusammensetzung enthaltend ein Pigment und das Diketopyrrolopyrrolpigment-Dispersant gemäß Anspruch 1 oder 2 oder die Pigmentdispersant-Zusammensetzung gemäß Anspruch 3 oder 4.

**7.** Die Pigmentzusammensetzung gemäß Anspruch 6, des weiteren enthaltend ein Pigmentderivat.

**8.** Die Pigmentzusammensetzung gemäß Anspruch 7, wobei das Pigmentderivat umfasst: wenigstens ein Pigmentderivat ausgewählt aus Pigmentderivaten in denen eine basische Gruppe, eine saure Gruppe, oder eine Phthalimidomethylgruppe eingebaut ist in einen Pigmentrest zusammengesetzt aus Diketopyrrolopyrrol, Chinacridon, Thiazinindigo, Benzoisoindol, oder Anthrachinon.

**9.** Die Pigmentzusammensetzung gemäß Anspruch 6, wobei das Pigment umfasst ein Diketopyrrolopyrrol-basiertes rotes Pigment, ein Chinacridon-basiertes rotes Pigment, ein Thiazinindigo-basiertes rotes Pigment, oder ein Anthrachinonbasiertes rotes Pigment.

**10.** Die Pigmentzusammensetzung gemäß irgendeinem der Ansprüche 6 bis 9, wobei das Pigment des weiteren ein gelbes Pigment umfasst.

**11.** Eine Farbzusammensetzung enthaltend eine Pigmentzusammensetzung gemäß irgendeinem der Ansprüche 6 bis 10 und einen Pigmentträger.

**12.** Ein Farbfilter mit einem Filtersegment hergestellt aus der Farbzusammensetzung gemäß Anspruch 11.

## Revendications

**1.** Agent dispersant pour pigments de dicétopyrrolopyrrole représenté par la formule (1) ci-après :

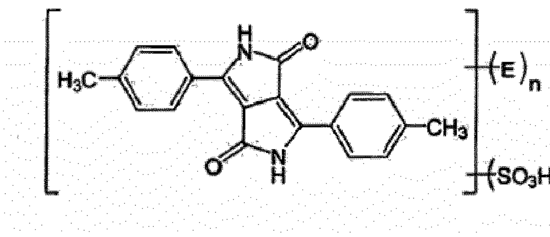

formula (1) formule (1)

dans la formule (1), E est un groupe basique représenté par la formule (2) ci-après ; et n et m vallent 1 :

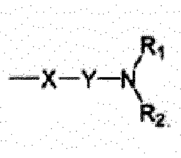

formula (2) formule (2)

dans la formule (2), X représente une liaison directe, -S-, -O-, $-SO_2-$, -CO-, $-SO_2NR-$, $-NRSO_2-$, -CONR-, $-CH_2NRCOCH_2NR-$, ou $-(CH_2)_kNH-$, à la condition que k représente un nombre entier compris entre 1 et 10 ; R représente un atome d'hydrogène, un groupe alkyle éventuellement substitué contenant 20 atomes de carbone ou moins, un groupe alcényle éventuellement substitué contenant 20 atomes de carbone ou moins, ou un groupe aryle éventuellement substitué contenant 20 atomes de carbone ou moins ; Y représente une liaison directe, un groupe alkylène éventuellement substitué contenant 20 atomes de carbone ou moins, un groupe alkénylène éventuellement substitué contenant 20 atomes de carbone ou moins, un groupe arylène éventuellement substitué contenant 20 atomes de carbone ou moins, un groupe arylène éventuellement substitué contenant 20 atomes de carbone ou moins, un hétérocycle éventuellement substitué comprenant un atome d'azote, d'oxygène ou de souffre, ou $-Y_1-Y_2-Y_3-$ ; $Y_1$ et $Y_3$ représentent chacun indépendamment un groupe alkylène éventuellement substitué contenant 20 atomes de carbone ou moins, un groupe alkénylène éventuellement substitué contenant 20 atomes de carbone ou moins, un groupe arylène éventuellement substitué contenant 20 atomes de carbone ou moins, ou un hétérocycle éventuellement substitué comprenant un atome d'azote, d'oxygène ou de souffre ; $Y_2$ représente une liaison directe, -NR-, -O-, $-SO_2-$, ou -CO-, et R est comme défini ci-dessus, à la condition que $Y_2$ ne soit pas une liaison directe quand $Y_1$ et $Y_3$ appartiennent au même groupe ; $R_1$ et $R_2$ représentent chacun indépendamment un groupe alkyle saturé ou non éventuellement substitué contenant 30 atomes de carbone ou moins.

**2.** Agent dispersant pour pigments de dicétopyrrolopyrrole selon la revendication 1, représenté par la formule (4) ci-après :

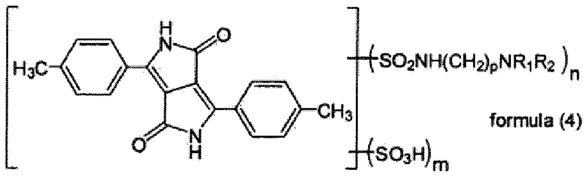

formula (4) formule (4)

dans la formule (4), p représente un nombre entier compris entre 2 et 5 ; et $R_1$ et $R_2$ représentent chacun indépendamment un groupe alkyle saturé ou non éventuellement substitué contenant 10 atomes de carbone ou moins.

**3.** Composition d'agent dispersant pour pigments comprenant l'agent dispersant pour pigments de dicétopyrrolopyrrole selon la revendication 1 ou 2, et comprenant en outre un composé représenté par la formule (1) ci-après :

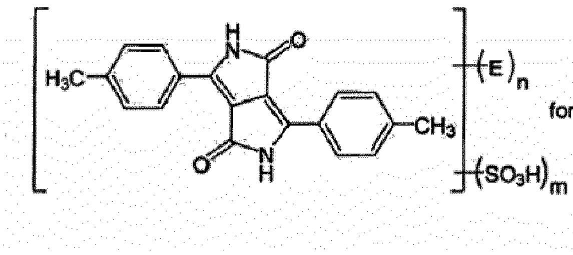

formula (1) formule (1)

dans ladite formule (1), E est un groupe basique représenté par la formule (2) ou (3) ci-après ; et n vaut 2 et m vaut 0 :

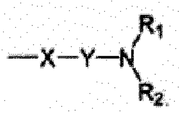

formula (2) formule (2)

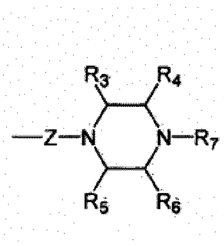

formula (3) formule (3)

dans la formule (2), X représente une liaison directe, -S-, -O-, $-SO_2-$, -CO-, $-SO_2NR-$, $-NRSO_2-$, -CONR-, $-CH_2NRCOCH_2NR-$, ou $-(CH_2)_kNH-$, à la condition que k représente un nombre entier compris entre 1 et 10 ; R représente un atome d'hydrogène, un groupe alkyle éventuellement substitué contenant 20 atomes de carbone ou moins, un groupe alcényle éventuellement substitué contenant 20 atomes de carbone ou moins, ou un groupe aryle éventuellement substitué contenant 20 atomes de carbone ou moins ; Y représente une liaison directe, un groupe alkylène éventuellement substitué contenant 20 atomes de carbone ou moins, un groupe alkénylène éventuellement substitué contenant 20 atomes de carbone ou moins, un groupe arylène éventuellement substitué contenant 20 atomes de carbone ou moins, un hétérocycle éventuellement substitué comprenant un atome d'azote, d'oxygène ou de souffre, ou $-Y_1-Y_2-Y_3-$ ; $Y_1$ et $Y_3$ représentent chacun indépendamment un groupe alkylène éventuellement substitué contenant 20 atomes de carbone ou moins, un groupe alkénylène éventuellement substitué contenant 20 atomes de carbone ou moins, un groupe arylène éventuellement substitué contenant 20 atomes de carbone ou moins, ou un hétérocycle éventuellement substitué comprenant un atome d'azote, d'oxygène ou de souffre ; $Y_2$ représente une liaison directe -NR-, -O-, $-SO_2-$, ou - CO-, et R est comme défini ci-dessus, à la condition que $Y_2$ ne soit pas une liaison directe quand $Y_1$ et $Y_3$ appartiennent au même groupe ; $R_1$ et $R_2$ représentent chacun

indépendamment un groupe alkyle saturé ou non éventuellement substitué contenant 30 atomes de carbone ou moins, ou $R_1$ et $R_2$ forment ensemble un hétérocycle éventuellement substitué comprenant un atome d'azote, d'oxygène ou de souffre ;

dans la formule (3), Z est une liaison directe, $-CH_2NR'COCH_2NR'-$,$-CH_2NR'COCH_2NR'-G-$, -NR'-, -NR'-G-CO-, -NR'-G-CONR'-, $-NR'-G-SO_2-$, $-NR'G-SO_2NR'-$, -O-G-CO-, -O-G-CONR'-, $-SO_2-$, $-O-G-SO_2-$, ou $-O-G-SO_2NR'-$, dans laquelle G représente un groupe alkylène éventuellement substitué contenant 20 atomes de carbone ou moins, un groupe alkénylène éventuellement substitué contenant 20 atomes de carbone ou moins, ou un groupe arylène éventuellement substitué contenant 20 atomes de carbone ou moins, et R' représente un atome d'hydrogène, un groupe alkyle éventuellement substitué contenant 20 atomes de carbone ou moins, un groupe alcényle éventuellement substitué contenant 20 atomes de carbone ou moins, un groupe aryle éventuellement substitué contenant 20 atomes de carbone ou moins ; $R_3$, $R_4$, $R_5$, et $R_6$ représentent chacun indépendamment un atome d'hydrogène, un groupe alkyle éventuellement substitué contenant 20 atomes de carbone ou moins, un groupe alcényle éventuellement substitué contenant 20 atomes de carbone ou moins, ou un groupe aryle éventuellement substitué contenant 20 atomes de carbone ou moins ; et $R_7$ représente un atome d'hydrogène, un groupe alkyle éventuellement substitué contenant 20 atomes de carbone ou moins ou un groupe alcényle éventuellement substitué contenant 20 atomes de carbone ou moins.

**4.** Composition d'agent dispersant pour pigments selon la revendication 3, dans laquelle le composé représenté par la formule (1) dans laquelle n vaut 2 et m vaut 0 est représenté par la formule (4) ci-après :

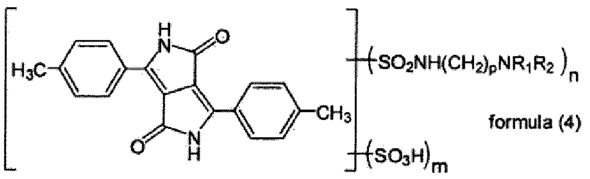

formula (4) formule (4)

dans ladite formule (4), p représente un nombre entier compris entre 2 et 5 ; et $R_1$ et $R_2$ représentent chacun indépendamment un groupe alkyle saturé ou non éventuellement substitué contenant 10 atomes de carbone ou moins, ou $R_1$ et $R_2$ forment ensemble un hétérocycle éventuellement substitué comprenant un atome d'azote, d'oxygène ou de souffre.

**5.** Procédé de production d'un agent dispersant pour pigments de dicétopyrrolopyrrole selon la revendication 1 ou 2, ou de production d'une composition selon les revendications 3 et 4, qui consiste à sulfoner un pigment de dicétopyrrolopyrrole représenté par la formule (6) ci-après, puis à faire réagir le pigment avec un agent de chloration pour la chlorosulfonylation, puis ensuite à faire réagir le pigment avec un composant amine.

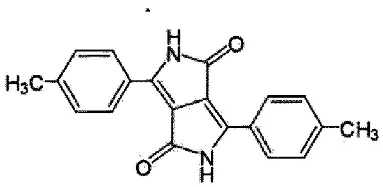

formula (6) formule (6)

**6.** Composition de pigment comprenant un pigment et l'agent dispersant de pigment de dicétopyrrolopyrrole selon la revendication 1 ou 2 ou la composition d'agent de dispersant de pigment selon la revendication 3 ou 4.

**7.** La composition de pigment selon la revendication 6 comprend en outre un dérivé de pigment.

**8.** Composition de pigment selon la revendication 7, dans laquelle le dérivé de pigment comprend au moins un dérivé de pigment sélectionné dans des dérivés de pigment dans lesquels un groupe basique, un groupe acide ou un groupe phtalimidométhyle est introduit dans un résidu de pigment composé de dicétopyrrolopyrrole, de quinacridone, de thiazinéindigo, de benzoisoindole, ou d' anthraquinone.

**9.** Composition de pigment selon la revendication 6, dans laquelle le pigment comprend un pigment rouge à base de dicétopyrrolopyrrole, un pigment rouge à base de quinacridone, un pigment rouge à base de thiazinéindigo, ou un

pigment rouge à base d'anthraquinone.

**10.** Composition de pigment selon l'une quelconque des revendications 6 à 9, dans laquelle le pigment comprend en outre un pigment jaune.

**11.** Composition colorante comprenant une composition de pigment selon l'une quelconque des revendications 6 à 10 et un support de pigment.

**12.** Filtre de couleurs comprenant un segment de filtre formé à partir de la composition colorante selon la revendication 11.

[Figure 1]

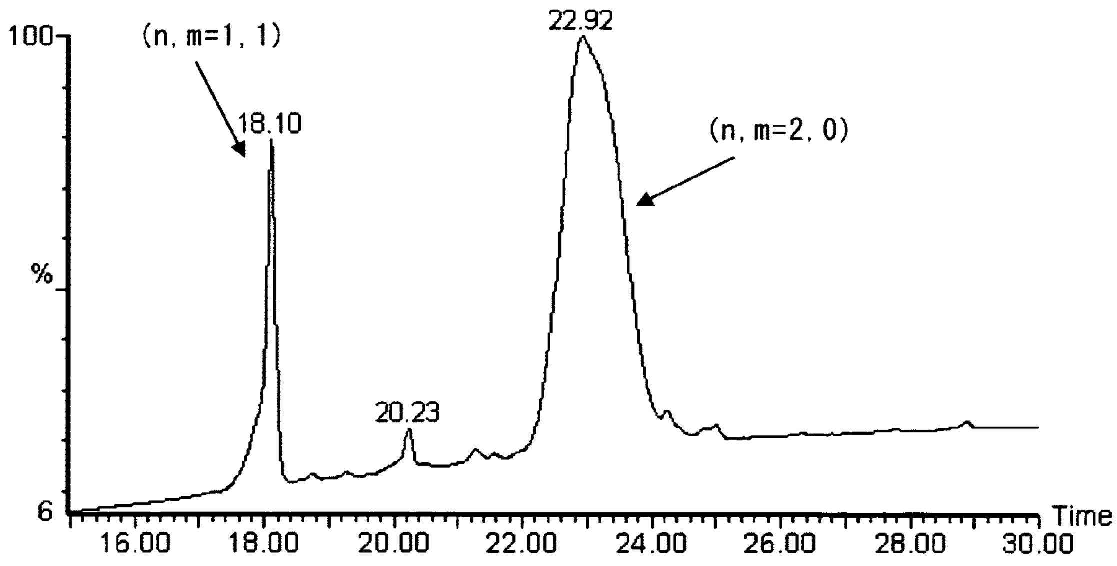


Chromatogram of pigment dispersant A

[Figure 2]

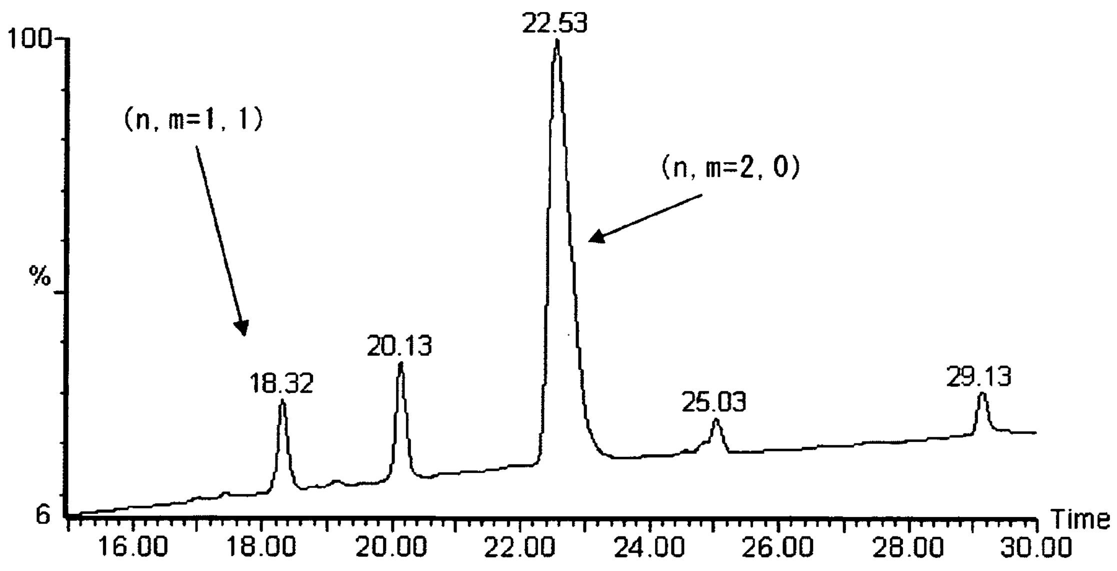


Chromatogram of pigment dispersant B

[Figure 3]

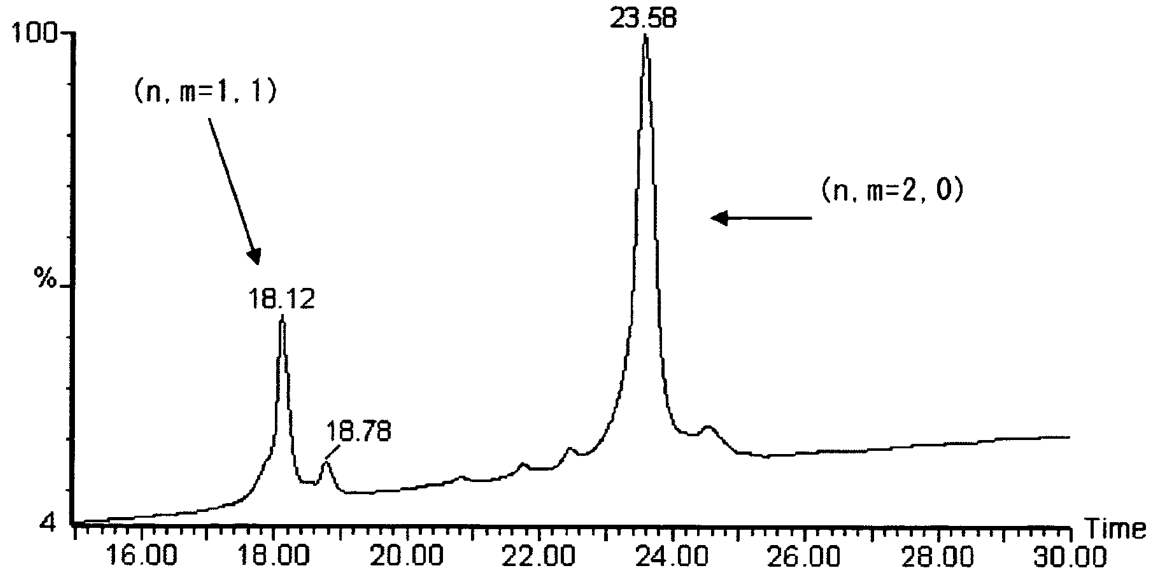


Chromatogram of pigment dispersant C

[Figure 4]

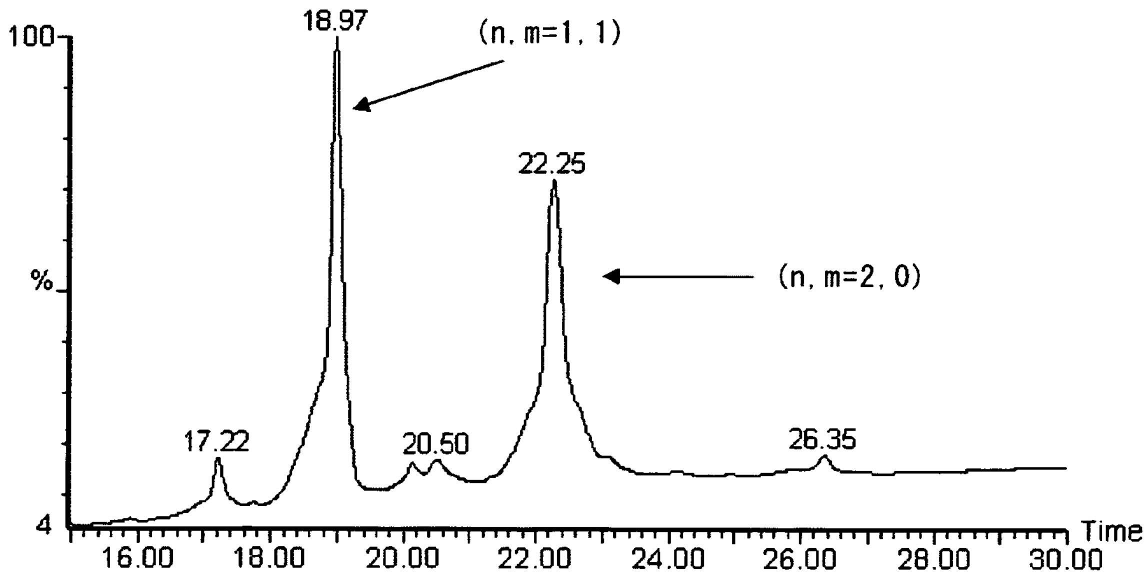


Chromatogram of pigment dispersant D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H326767 A
- JP H6316676 A
- JP H6331398 A
- EP 2236562 A1